# EUROPEAN PATENT APPLICATION

(11) **EP 4 380 231 A1**
(43) Date of publication of application: **05.06.2024**
(21) Application number: 22849899.4
(22) Date of filing: 28.07.2022
(51) Int. Cl.: H04W 28/24, H04W 76/36, H04W 8/18

(54) **METHOD FOR MANAGING QOS**

(30) Priority: 28.07.2021 KR 20210099332; 21.03.2022 US 202263321777 P
(71) Applicant: LG Electronics Inc., Yeongdeungpo-gu Seoul 07336 (KR)
(72) Inventor: KIM, Laeyoung, Seoul 06772 (KR); YOUN, Myungjune, Seoul 06772 (KR)
(74) Representative: Plasseraud IP
(86) International application number: PCT/KR2022/011117
(87) International publication number: WO 2023/008923

(57) **Abstract**

A disclosure of the present specification provides a method for providing a multi-modality service by a base station. The method may comprise the steps of: receiving quality of service (QoS) control information from an SMF, wherein the QoS control information includes priority information about a QoS of a first UE and priority information about a QoS of a second UE, and the priority for the QoS of the first UE is higher than the priority for the QoS of the second UE; determining to perform QoS control due to lack of resources; and lowering the QoS of the second UE on the basis of the QoS control information, wherein the QoS of the first UE is maintained on the basis of lowering the QoS of the second UE.

## Description

### TECHNICAL FIELD

The present specification relates to mobile communications.

### BACKGROUND ART

3rd generation partnership project (3GPP) long-term evolution (LTE) is a technology for enabling high-speed packet communications. Many schemes have been proposed for the LTE objective including those that aim to reduce user and provider costs, improve service quality, and expand and improve coverage and system capacity. The 3GPP LTE requires reduced cost per bit, increased service availability, flexible use of a frequency band, a simple structure, an open interface, and adequate power consumption of a terminal as an upper-level requirement.

Work has started in international telecommunication union (ITU) and 3GPP to develop requirements and specifications for new radio (NR) systems. 3GPP has to identify and develop the technology components needed for successfully standardizing the new RAT timely satisfying both the urgent market needs, and the more long-term requirements set forth by the ITU radio communication sector (ITU-R) international mobile telecommunications (IMT)-2020 process. Further, the NR should be able to use any spectrum band ranging at least up to 100 GHz that may be made available for wireless communications even in a more distant future.

The NR targets a single technical framework addressing all usage scenarios, requirements and deployment scenarios including enhanced mobile broadband (eMBB), massive machine-type-communications (mMTC), ultra-reliable and low latency communications (URLLC), etc. The NR shall be inherently forward compatible.

### DESCLOSURE

### TECHNICAL PROBLEM

When managing multiple terminals, there has not been a conventional QoS management method that considers differences in importance between terminals in congestion situations.

### TECHNICAL SOLUTION

The base station manages the QoS of each terminal based on priority according to importance between terminals.

### ADVANTAGEOUS EFFECTS

The present specification may have various effects.

For example, through the procedures disclosed herein, coordinated QoS can be efficiently provided to multiple UEs associated with one/same application.

Effects that can be obtained through specific examples of the present specification are not limited to the effects listed above. For example, various technical effects that a person having ordinary skill in the related art can understand or derive from this specification may exist. Accordingly, the specific effects of the present specification are not limited to those explicitly described herein, and may include various effects that can be understood or derived from the technical characteristics of the present specification.

### BRIEF DESCRIPTION OF THE DRAWINGS

FIG. 1 shows an example of a communication system to which implementations of the present disclosure is applied.
FIG. 2 shows an example of wireless devices to which implementations of the present disclosure is applied.
FIG. 3 shows an example of a wireless device to which implementations of the present disclosure is applied.
FIG. 4 shows an example of UE to which implementations of the present disclosure is applied.
FIG. 5 shows examples of 5G system architectures to which implementations of the present specification are applied.
FIG. 6 shows an example of Live Event Selective Immersion.
FIG. 7 shows the first embodiment of the present specification.
FIGS.8a and 8b show a second embodiment of the present specification.
FIGS. 9a and 9b show a third embodiment of the present specification.
FIGS. 10a and 10b show the fourth embodiment of the present specification.
FIGS. 11a and 11b show the fifth embodiment of the present specification.
FIG. 12 shows the procedure of the base station according to the disclosure of this specification.
FIG. 13 shows the procedure of the SMF according to the disclosure of this specification.

### MODE FOR INVENTION

The following techniques, apparatuses, and systems may be applied to a variety of wireless multiple access systems. Examples of the multiple access systems include a code division multiple access (CDMA) system, a frequency division multiple access (FDMA) system, a time division multiple access (TDMA) system, an orthogonal frequency division multiple access (OFDMA) system, a single carrier frequency division multiple access (SC-FDMA) system, and a multicarrier frequency division multiple access (MC-FDMA) system. CDMA may be embodied through radio technology such as universal terrestrial radio access (UTRA) or CDMA2000. TDMA may be embodied through radio technology such as global system for mobile communications (GSM), general packet radio service (GPRS), or enhanced data rates for GSM evolution (EDGE). OFDMA may be embodied through radio technology such as institute of electrical and electronics engineers (IEEE) 802.11 (Wi-Fi), IEEE 802.16 (WiMAX), IEEE 802.20, or evolved UTRA (E-UTRA). UTRA is a part of a universal mobile telecommunications system (UMTS). 3rd generation partnership project (3GPP) long term evolution (LTE) is a part of evolved UMTS (E-UMTS) using E-UTRA. 3GPP LTE employs OFDMA in DL and SC-FDMA in UL. Evolution of 3GPP LTE includes LTE-A (advanced), LTE-A Pro, and/or 5G NR (new radio).

For convenience of description, implementations of the present disclosure are mainly described in regards to a 3GPP based wireless communication system. However, the technical features of the present disclosure are not limited thereto. For example, although the following detailed description is given based on a mobile communication system corresponding to a 3GPP based wireless communication system, aspects of the present disclosure that are not limited to 3GPP based wireless communication system are applicable to other mobile communication systems.

For terms and technologies which are not specifically described among the terms of and technologies employed in the present disclosure, the wireless communication standard documents published before the present disclosure may be referenced.

In the present disclosure, "A or B" may mean "only A", "only B", or "both A and B". In other words, "A or B" in the present disclosure may be interpreted as "A and/or B". For example, "A, B or C" in the present disclosure may mean "only A", "only B", "only C", or "any combination of A, B and C".

In the present disclosure, slash (/) or comma (,) may mean "and/or". For example, "A/B" may mean "A and/or B". Accordingly, "A/B" may mean "only A", "only B", or "both A and B". For example, "A, B, C" may mean "A, B or C".

In the present disclosure, "at least one of A and B" may mean "only A", "only B" or "both A and B". In addition, the expression "at least one of A or B" or "at least one of A and/or B" in the present disclosure may be interpreted as same as "at least one of A and B".

In addition, in the present disclosure, "at least one of A, B and C" may mean "only A", "only B", "only C", or "any combination of A, B and C". In addition, "at least one of A, B or C" or "at least one of A, B and/or C" may mean "at least one of A, B and C" .

Also, parentheses used in the present disclosure may mean "for example". In detail, when it is shown as "control information (PDCCH)", "PDCCH" may be proposed as an example of "control information". In other words, "control information" in the present disclosure is not limited to "PDCCH", and "PDCCH" may be proposed as an example of "control information". In addition, even when shown as "control information (i.e., PDCCH)", "PDCCH" may be proposed as an example of "control information".

Technical features that are separately described in one drawing in the present disclosure may be implemented separately or simultaneously.

Although not limited thereto, various descriptions, functions, procedures, suggestions, methods and/or operational flowcharts of the present disclosure disclosed herein can be applied to various fields requiring wireless communication and/or connection (e.g., 5G) between devices.

Hereinafter, the present disclosure will be described in more detail with reference to drawings. The same reference numerals in the following drawings and/or descriptions may refer to the same and/or corresponding hardware blocks, software blocks, and/or functional blocks unless otherwise indicated.

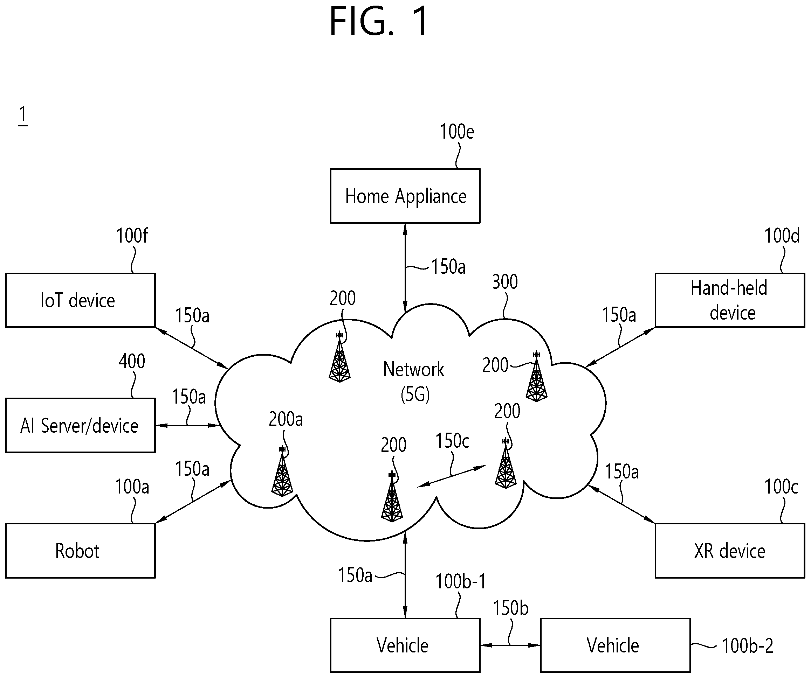

FIG. 1 shows an example of a communication system to which implementations of the present disclosure is applied.

The 5G usage scenarios shown in FIG. 1 are only exemplary, and the technical features of the present disclosure can be applied to other 5G usage scenarios which are not shown in FIG. 1.

Three main requirement categories for 5G include (1) a category of enhanced mobile broadband (eMBB), (2) a category of massive machine type communication (mMTC), and (3) a category of ultra-reliable and low latency communications (URLLC).

Referring to FIG. 1, the communication system 1 includes wireless devices 100a to 100f, base stations (BSs) 200, and a network 300. Although FIG. 1 illustrates a 5G network as an example of the network of the communication system 1, the implementations of the present disclosure are not limited to the 5G system, and can be applied to the future communication system beyond the 5G system.

The BSs 200 and the network 300 may be implemented as wireless devices and a specific wireless device may operate as a BS/network node with respect to other wireless devices.

The wireless devices 100a to 100f represent devices performing communication using radio access technology (RAT) (e.g., 5G new RAT (NR)) or LTE) and may be referred to as communication/radio/SG devices. The wireless devices 100a to 100f may include, without being limited to, a robot 100a, vehicles 100b-1 and 100b-2, an extended reality (XR) device 100c, a hand-held device 100d, a home appliance 100e, an IoT device 100f, and an artificial intelligence (AI) device/server 400. For example, the vehicles may include a vehicle having a wireless communication function, an autonomous driving vehicle, and a vehicle capable of performing communication between vehicles. The vehicles may include an unmanned aerial vehicle (UAV) (e.g., a drone). The XR device may include an AR/VR/Mixed Reality (MR) device and may be implemented in the form of a head-mounted device (HMD), a head-up display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter.

In the present disclosure, the wireless devices 100a to 100f may be called user equipments (UEs). A UE may include, for example, a cellular phone, a smartphone, a laptop computer, a digital broadcast terminal, a personal digital assistant (PDA), a portable multimedia player (PMP), a navigation system, a slate personal computer (PC), a tablet PC, an ultrabook, a vehicle, a vehicle having an autonomous traveling function, a connected car, an UAV, an AI module, a robot, an AR device, a VR device, an MR device, a hologram device, a public safety device, an MTC device, an IoT device, a medical device, a FinTech device (or a financial device), a security device, a weather/environment device, a device related to a 5G service, or a device related to a fourth industrial revolution field.

The UAV may be, for example, an aircraft aviated by a wireless control signal without a human being onboard.

The VR device may include, for example, a device for implementing an object or a background of the virtual world. The AR device may include, for example, a device implemented by connecting an object or a background of the virtual world to an object or a background of the real world. The MR device may include, for example, a device implemented by merging an object or a background of the virtual world into an object or a background of the real world. The hologram device may include, for example, a device for implementing a stereoscopic image of 360 degrees by recording and reproducing stereoscopic information, using an interference phenomenon of light generated when two laser lights called holography meet.

The public safety device may include, for example, an image relay device or an image device that is wearable on the body of a user.

The MTC device and the IoT device may be, for example, devices that do not require direct human intervention or manipulation. For example, the MTC device and the IoT device may include smartmeters, vending machines, thermometers, smartbulbs, door locks, or various sensors.

The medical device may be, for example, a device used for the purpose of diagnosing, treating, relieving, curing, or preventing disease. For example, the medical device may be a device used for the purpose of diagnosing, treating, relieving, or correcting injury or impairment. For example, the medical device may be a device used for the purpose of inspecting, replacing, or modifying a structure or a function. For example, the medical device may be a device used for the purpose of adjusting pregnancy. For example, the medical device may include a device for treatment, a device for operation, a device for (in vitro) diagnosis, a hearing aid, or a device for procedure.

The security device may be, for example, a device installed to prevent a danger that may arise and to maintain safety. For example, the security device may be a camera, a closed-circuit TV (CCTV), a recorder, or a black box.

The FinTech device may be, for example, a device capable of providing a financial service such as mobile payment. For example, the FinTech device may include a payment device or a point of sales (POS) system.

The weather/environment device may include, for example, a device for monitoring or predicting a weather/environment.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, a 5G (e.g., NR) network, and a beyond-5G network. Although the wireless devices 100a to 100f may communicate with each other through the BSs 200/network 300, the wireless devices 100a to 100f may perform direct communication (e.g., sidelink communication) with each other without passing through the BSs 200/network 300. For example, the vehicles 100b-1 and 100b-2 may perform direct communication (e.g., vehicle-to-vehicle (V2V)/vehicle-to-everything (V2X) communication). The IoT device (e.g., a sensor) may perform direct communication with other IoT devices (e.g., sensors) or other wireless devices 100a to 100f.

Wireless communication/connections 150a, 150b and 150c may be established between the wireless devices 100a to 100f and/or between wireless device 100a to 100f and BS 200 and/or between BSs 200. Herein, the wireless communication/connections may be established through various RATs (e.g., 5G NR) such as uplink/downlink communication 150a, sidelink communication (or device-to-device (D2D) communication) 150b, inter-base station communication 150c (e.g., relay, integrated access and backhaul (IAB)), etc. The wireless devices 100a to 100f and the BSs 200/the wireless devices 100a to 100f may transmit/receive radio signals to/from each other through the wireless communication/connections 150a, 150b and 150c. For example, the wireless communication/connections 150a, 150b and 150c may transmit/receive signals through various physical channels. To this end, at least a part of various configuration information configuring processes, various signal processing processes (e.g., channel encoding/decoding, modulation/demodulation, and resource mapping/de-mapping), and resource allocating processes, for transmitting/receiving radio signals, may be performed based on the various proposals of the present disclosure.

AI refers to the field of studying artificial intelligence or the methodology that can create it, and machine learning refers to the field of defining various problems addressed in the field of AI and the field of methodology to solve them. Machine learning is also defined as an algorithm that increases the performance of a task through steady experience on a task.

Robot means a machine that automatically processes or operates a given task by its own ability. In particular, robots with the ability to recognize the environment and make self-determination to perform actions can be called intelligent robots. Robots can be classified as industrial, medical, home, military, etc., depending on the purpose or area of use. The robot can perform a variety of physical operations, such as moving the robot joints with actuators or motors. The movable robot also includes wheels, brakes, propellers, etc., on the drive, allowing it to drive on the ground or fly in the air.

Autonomous driving means a technology that drives on its own, and autonomous vehicles mean vehicles that drive without user's control or with minimal user's control. For example, autonomous driving may include maintaining lanes in motion, automatically adjusting speed such as adaptive cruise control, automatic driving along a set route, and automatically setting a route when a destination is set. The vehicle covers vehicles equipped with internal combustion engines, hybrid vehicles equipped with internal combustion engines and electric motors, and electric vehicles equipped with electric motors, and may include trains, motorcycles, etc., as well as cars. Autonomous vehicles can be seen as robots with autonomous driving functions.

Extended reality is collectively referred to as VR, AR, and MR. VR technology provides objects and backgrounds of real world only through computer graphic (CG) images. AR technology provides a virtual CG image on top of a real object image. MR technology is a CG technology that combines and combines virtual objects into the real world. MR technology is similar to AR technology in that they show real and virtual objects together. However, there is a difference in that in AR technology, virtual objects are used as complementary forms to real objects, while in MR technology, virtual objects and real objects are used as equal personalities.

NR supports multiples numerologies (and/or multiple subcarrier spacings (SCS)) to support various 5G services. For example, if SCS is 15 kHz, wide area can be supported in traditional cellular bands, and if SCS is 30 kHz/60 kHz, dense-urban, lower latency, and wider carrier bandwidth can be supported. If SCS is 60 kHz or higher, bandwidths greater than 24.25 GHz can be supported to overcome phase noise.

The NR frequency band may be defined as two types of frequency range, i.e., FR1 and FR2. The numerical value of the frequency range may be changed. For example, the frequency ranges of the two types (FR1 and FR2) may be as shown in Table 1 below. For ease of explanation, in the frequency ranges used in the NR system, FR1 may mean "sub 6 GHz range", FR2 may mean "above 6 GHz range," and may be referred to as millimeter wave (mmW).

**[Table 1]**

| Frequency Range designation | Corresponding frequency range | Subcarrier Spacing |
|---|---|---|
| FR1 | 450MHz - 6000MHz | 15, 30, 60kHz |
| FR2 | 24250MHz - 52600MHz | 60, 120, 240kHz |

As mentioned above, the numerical value of the frequency range of the NR system may be changed. For example, FR1 may include a frequency band of 410MHz to 7125MHz as shown in Table 2 below. That is, FR1 may include a frequency band of 6GHz (or 5850, 5900, 5925 MHz, etc.) or more. For example, a frequency band of 6 GHz (or 5850, 5900, 5925 MHz, etc.) or more included in FR1 may include an unlicensed band. Unlicensed bands may be used for a variety of purposes, for example for communication for vehicles (e.g., autonomous driving).

**[Table 2]**

| Frequency Range designation | Corresponding frequency range | Subcarrier Spacing |
|---|---|---|
| FR1 | 410MHz - 7125MHz | 15, 30, 60kHz |
| FR2 | 24250MHz - 52600MHz | 60, 120, 240kHz |

Here, the radio communication technologies implemented in the wireless devices in the present disclosure may include narrowband internet-of-things (NB-IoT) technology for low-power communication as well as LTE, NR and 6G. For example, NB-IoT technology may be an example of low power wide area network (LPWAN) technology, may be implemented in specifications such as LTE Cat NB1 and/or LTE Cat NB2, and may not be limited to the above-mentioned names. Additionally and/or alternatively, the radio communication technologies implemented in the wireless devices in the present disclosure may communicate based on LTE-M technology. For example, LTE-M technology may be an example of LPWAN technology and be called by various names such as enhanced machine type communication (eMTC). For example, LTE-M technology may be implemented in at least one of the various specifications, such as 1) LTE Cat 0, 2) LTE Cat M1, 3) LTE Cat M2, 4) LTE non-bandwidth limited (non-BL), 5) LTE-MTC, 6) LTE Machine Type Communication, and/or 7) LTE M, and may not be limited to the above-mentioned names. Additionally and/or alternatively, the radio communication technologies implemented in the wireless devices in the present disclosure may include at least one of ZigBee, Bluetooth, and/or LPWAN which take into account low-power communication, and may not be limited to the above-mentioned names. For example, ZigBee technology may generate personal area networks (PANs) associated with small/low-power digital communication based on various specifications such as IEEE 802.15.4 and may be called various names.

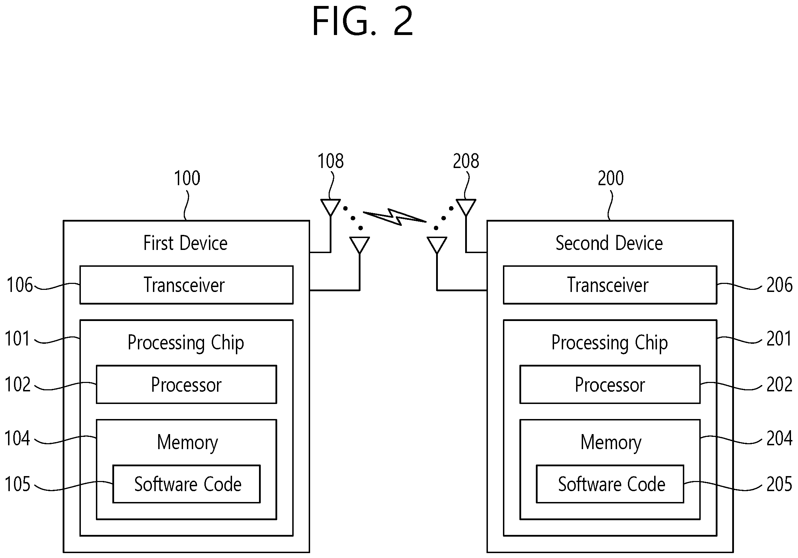

**FIG. 2** **shows an example of wireless devices to which implementations of the present disclosure is applied.**

Referring to FIG. 2, a first wireless device 100 and a second wireless device 200 may transmit/receive radio signals to/from an external device through a variety of RATs (e.g., LTE and NR).

In FIG. 2, {the first wireless device 100 and the second wireless device 200} may correspond to at least one of {the wireless device 100a to 100f and the BS 200}, {the wireless device 100a to 100f and the wireless device 100a to 100f} and/or {the BS 200 and the BS 200} of FIG. 1.

The first wireless device 100 may include at least one transceiver, such as a transceiver 106, at least one processing chip, such as a processing chip 101, and/or one or more antennas 108.

The processing chip 101 may include at least one processor, such a processor 102, and at least one memory, such as a memory 104. It is exemplarily shown in FIG. 2 that the memory 104 is included in the processing chip 101. Additional and/or alternatively, the memory 104 may be placed outside of the processing chip 101.

The processor 102 may control the memory 104 and/or the transceiver 106 and may be configured to implement the descriptions, functions, procedures, suggestions, methods and/or operational flowcharts described in the present disclosure. For example, the processor 102 may process information within the memory 104 to generate first information/signals and then transmit radio signals including the first information/signals through the transceiver 106. The processor 102 may receive radio signals including second information/signals through the transceiver 106 and then store information obtained by processing the second information/signals in the memory 104.

The memory 104 may be operably connectable to the processor 102. The memory 104 may store various types of information and/or instructions. The memory 104 may store a software code 105 which implements instructions that, when executed by the processor 102, perform the descriptions, functions, procedures, suggestions, methods and/or operational flowcharts disclosed in the present disclosure. For example, the software code 105 may implement instructions that, when executed by the processor 102, perform the descriptions, functions, procedures, suggestions, methods and/or operational flowcharts disclosed in the present disclosure. For example, the software code 105 may control the processor 102 to perform one or more protocols. For example, the software code 105 may control the processor 102 to perform one or more layers of the radio interface protocol.

Herein, the processor 102 and the memory 104 may be a part of a communication modem/circuit/chip designed to implement RAT (e.g., LTE or NR). The transceiver 106 may be connected to the processor 102 and transmit and/or receive radio signals through one or more antennas 108. Each of the transceiver 106 may include a transmitter and/or a receiver. The transceiver 106 may be interchangeably used with radio frequency (RF) unit(s). In the present disclosure, the first wireless device 100 may represent a communication modem/circuit/chip.

The second wireless device 200 may include at least one transceiver, such as a transceiver 206, at least one processing chip, such as a processing chip 201, and/or one or more antennas 208.

The processing chip 201 may include at least one processor, such a processor 202, and at least one memory, such as a memory 204. It is exemplarily shown in FIG. 2 that the memory 204 is included in the processing chip 201. Additional and/or alternatively, the memory 204 may be placed outside of the processing chip 201.

The processor 202 may control the memory 204 and/or the transceiver 206 and may be configured to implement the descriptions, functions, procedures, suggestions, methods and/or operational flowcharts described in the present disclosure. For example, the processor 202 may process information within the memory 204 to generate third information/signals and then transmit radio signals including the third information/signals through the transceiver 206. The processor 202 may receive radio signals including fourth information/signals through the transceiver 106 and then store information obtained by processing the fourth information/signals in the memory 204.

The memory 204 may be operably connectable to the processor 202. The memory 204 may store various types of information and/or instructions. The memory 204 may store a software code 205 which implements instructions that, when executed by the processor 202, perform the descriptions, functions, procedures, suggestions, methods and/or operational flowcharts disclosed in the present disclosure. For example, the software code 205 may implement instructions that, when executed by the processor 202, perform the descriptions, functions, procedures, suggestions, methods and/or operational flowcharts disclosed in the present disclosure. For example, the software code 205 may control the processor 202 to perform one or more protocols. For example, the software code 205 may control the processor 202 to perform one or more layers of the radio interface protocol.

Herein, the processor 202 and the memory 204 may be a part of a communication modem/circuit/chip designed to implement RAT (e.g., LTE or NR). The transceiver 206 may be connected to the processor 202 and transmit and/or receive radio signals through one or more antennas 208. Each of the transceiver 206 may include a transmitter and/or a receiver. The transceiver 206 may be interchangeably used with RF unit. In the present disclosure, the second wireless device 200 may represent a communication modem/circuit/chip.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as physical (PHY) layer, media access control (MAC) layer, radio link control (RLC) layer, packet data convergence protocol (PDCP) layer, radio resource control (RRC) layer, and service data adaptation protocol (SDAP) layer). The one or more processors 102 and 202 may generate one or more protocol data units (PDUs) and/or one or more service data unit (SDUs) according to the descriptions, functions, procedures, suggestions, methods and/or operational flowcharts disclosed in the present disclosure. The one or more processors 102 and 202 may generate messages, control information, data, or information according to the descriptions, functions, procedures, suggestions, methods and/or operational flowcharts disclosed in the present disclosure. The one or more processors 102 and 202 may generate signals (e.g., baseband signals) including PDUs, SDUs, messages, control information, data, or information according to the descriptions, functions, procedures, suggestions, methods and/or operational flowcharts disclosed in the present disclosure and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, suggestions, methods and/or operational flowcharts disclosed in the present disclosure.

The one or more processors 102 and 202 may be referred to as controllers, microcontrollers, microprocessors, or microcomputers. The one or more processors 102 and 202 may be implemented by hardware, firmware, software, or a combination thereof. As an example, one or more application specific integrated circuits (ASICs), one or more digital signal processors (DSPs), one or more digital signal processing devices (DSPDs), one or more programmable logic devices (PLDs), or one or more field programmable gate arrays (FPGAs) may be included in the one or more processors 102 and 202. The descriptions, functions, procedures, suggestions, methods and/or operational flowcharts disclosed in the present disclosure may be implemented using firmware or software and the firmware or software may be configured to include the modules, procedures, or functions. Firmware or software configured to perform the descriptions, functions, procedures, suggestions, methods and/or operational flowcharts disclosed in the present disclosure may be included in the one or more processors 102 and 202 or stored in the one or more memories 104 and 204 so as to be driven by the one or more processors 102 and 202. The descriptions, functions, procedures, suggestions, methods and/or operational flowcharts disclosed in the present disclosure may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured by read-only memories (ROMs), random access memories (RAMs), electrically erasable programmable read-only memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the descriptions, functions, procedures, suggestions, methods and/or operational flowcharts disclosed in the present disclosure, to one or more other devices. The one or more transceivers 106 and 206 may receive user data, control information, and/or radio signals/channels, mentioned in the descriptions, functions, procedures, suggestions, methods and/or operational flowcharts disclosed in the present disclosure, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices.

The one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, suggestions, methods and/or operational flowcharts disclosed in the present disclosure, through the one or more antennas 108 and 208. In the present disclosure, the one or more antennas 108 and 208 may be a plurality of physical antennas or a plurality of logical antennas (e.g., antenna ports).

The one or more transceivers 106 and 206 may convert received user data, control information, radio signals/channels, etc., from RF band signals into baseband signals in order to process received user data, control information, radio signals/channels, etc., using the one or more processors 102 and 202. The one or more transceivers 106 and 206 may convert the user data, control information, radio signals/channels, etc., processed using the one or more processors 102 and 202 from the base band signals into the RF band signals. To this end, the one or more transceivers 106 and 206 may include (analog) oscillators and/or filters. For example, the one or more transceivers 106 and 206 can up-convert OFDM baseband signals to OFDM signals by their (analog) oscillators and/or filters under the control of the one or more processors 102 and 202 and transmit the up-converted OFDM signals at the carrier frequency. The one or more transceivers 106 and 206 may receive OFDM signals at a carrier frequency and down-convert the OFDM signals into OFDM baseband signals by their (analog) oscillators and/or filters under the control of the one or more processors 102 and 202.

In the implementations of the present disclosure, a UE may operate as a transmitting device in uplink (UL) and as a receiving device in downlink (DL). In the implementations of the present disclosure, a BS may operate as a receiving device in UL and as a transmitting device in DL. Hereinafter, for convenience of description, it is mainly assumed that the first wireless device 100 acts as the UE, and the second wireless device 200 acts as the BS. For example, the processor(s) 102 connected to, mounted on or launched in the first wireless device 100 may be configured to perform the UE behavior according to an implementation of the present disclosure or control the transceiver(s) 106 to perform the UE behavior according to an implementation of the present disclosure. The processor(s) 202 connected to, mounted on or launched in the second wireless device 200 may be configured to perform the BS behavior according to an implementation of the present disclosure or control the transceiver(s) 206 to perform the BS behavior according to an implementation of the present disclosure.

In the present disclosure, a BS is also referred to as a node B (NB), an eNode B (eNB), or a gNB.

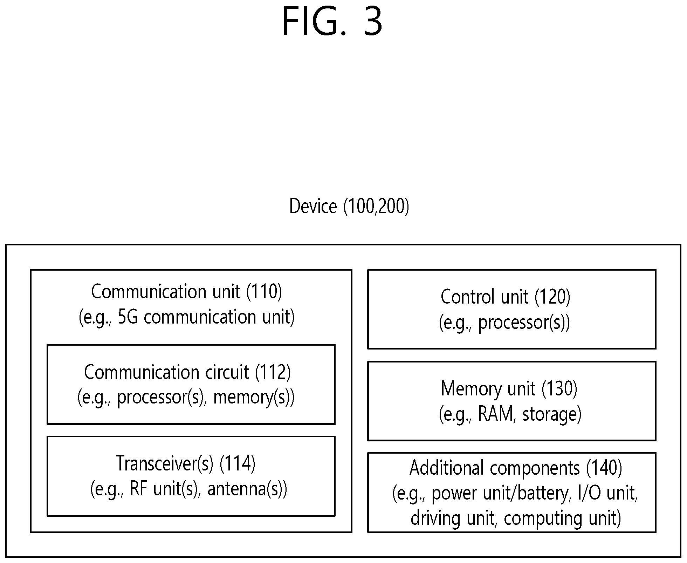

**FIG. 3** **shows an example of a wireless device to which implementations of the present disclosure is applied.**

The wireless device may be implemented in various forms according to a use-case/service (refer to FIG. 1).

Referring to FIG. 3, wireless devices 100 and 200 may correspond to the wireless devices 100 and 200 of FIG. 2 and may be configured by various elements, components, units/portions, and/or modules. For example, each of the wireless devices 100 and 200 may include a communication unit 110, a control unit 120, a memory unit 130, and additional components 140. The communication unit 110 may include a communication circuit 112 and transceiver(s) 114. For example, the communication circuit 112 may include the one or more processors 102 and 202 of FIG. 2 and/or the one or more memories 104 and 204 of FIG. 2. For example, the transceiver(s) 114 may include the one or more transceivers 106 and 206 of FIG. 2 and/or the one or more antennas 108 and 208 of FIG. 2. The control unit 120 is electrically connected to the communication unit 110, the memory unit 130, and the additional components 140 and controls overall operation of each of the wireless devices 100 and 200. For example, the control unit 120 may control an electric/mechanical operation of each of the wireless devices 100 and 200 based on programs/code/commands/information stored in the memory unit 130. The control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110.

The additional components 140 may be variously configured according to types of the wireless devices 100 and 200. For example, the additional components 140 may include at least one of a power unit/battery, input/output (I/O) unit (e.g., audio I/O port, video I/O port), a driving unit, and a computing unit. The wireless devices 100 and 200 may be implemented in the form of, without being limited to, the robot (100a of FIG. 1), the vehicles (100b-1 and 100b-2 of FIG. 1), the XR device (100c of FIG. 1), the hand-held device (100d of FIG. 1), the home appliance (100e of FIG. 1), the IoT device (100f of FIG. 1), a digital broadcast terminal, a hologram device, a public safety device, an MTC device, a medicine device, a FinTech device (or a finance device), a security device, a climate/environment device, the AI server/device (400 of FIG. 1), the BSs (200 of FIG. 1), a network node, etc. The wireless devices 100 and 200 may be used in a mobile or fixed place according to a use-example/service.

In FIG. 3, the entirety of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module within the wireless devices 100 and 200 may further include one or more elements. For example, the control unit 120 may be configured by a set of one or more processors. As an example, the control unit 120 may be configured by a set of a communication control processor, an application processor (AP), an electronic control unit (ECU), a graphical processing unit, and a memory control processor. As another example, the memory unit 130 may be configured by a RAM, a DRAM, a ROM, a flash memory, a volatile memory, a non-volatile memory, and/or a combination thereof.

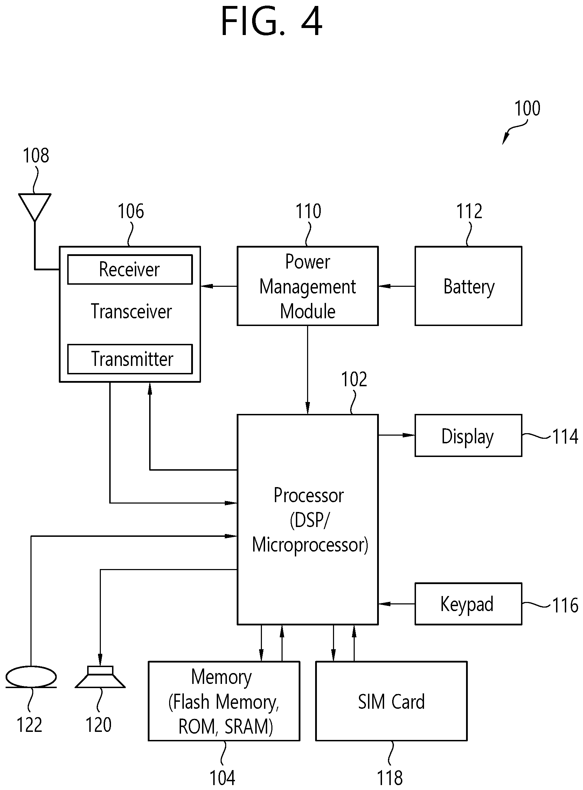

**FIG. 4** **shows an example of UE to which implementations of the present disclosure is applied.**

Referring to FIG. 4, a UE 100 may correspond to the first wireless device 100 of FIG. 2 and/or the wireless device 100 or 200 of FIG. 3.

A UE 100 includes a processor 102, a memory 104, a transceiver 106, one or more antennas 108, a power management module 110, a battery 112, a display 114, a keypad 116, a subscriber identification module (SIM) card 118, a speaker 120, and a microphone 122.

The processor 102 may be configured to implement the descriptions, functions, procedures, suggestions, methods and/or operational flowcharts disclosed in the present disclosure. The processor 102 may be configured to control one or more other components of the UE 100 to implement the descriptions, functions, procedures, suggestions, methods and/or operational flowcharts disclosed in the present disclosure. Layers of the radio interface protocol may be implemented in the processor 102. The processor 102 may include ASIC, other chipset, logic circuit and/or data processing device. The processor 102 may be an application processor. The processor 102 may include at least one of a digital signal processor (DSP), a central processing unit (CPU), a graphics processing unit (GPU), a modem (modulator and demodulator). An example of the processor 102 may be found in SNAPDRAGON^{™} series of processors made by Qualcomm^{®}, EXYNOS^{™} series of processors made by Samsung^{®}, a series of processors made by Apple^{®}, HELIO^{™} series of processors made by MediaTek^{®}, ATOM^{™} series of processors made by Intel^{®} or a corresponding next generation processor.

The memory 104 is operatively coupled with the processor 102 and stores a variety of information to operate the processor 102. The memory 104 may include ROM, RAM, flash memory, memory card, storage medium and/or other storage device. When the embodiments are implemented in software, the techniques described herein can be implemented with modules (e.g., procedures, functions, etc.) that perform the descriptions, functions, procedures, suggestions, methods and/or operational flowcharts disclosed in the present disclosure. The modules can be stored in the memory 104 and executed by the processor 102. The memory 104 can be implemented within the processor 102 or external to the processor 102 in which case those can be communicatively coupled to the processor 102 via various means as is known in the art.

The transceiver 106 is operatively coupled with the processor 102, and transmits and/or receives a radio signal. The transceiver 106 includes a transmitter and a receiver. The transceiver 106 may include baseband circuitry to process radio frequency signals. The transceiver 106 controls the one or more antennas 108 to transmit and/or receive a radio signal.

The power management module 110 manages power for the processor 102 and/or the transceiver 106. The battery 112 supplies power to the power management module 110.

The display 114 outputs results processed by the processor 102. The keypad 116 receives inputs to be used by the processor 102. The keypad 116 may be shown on the display 114.

The SIM card 118 is an integrated circuit that is intended to securely store the international mobile subscriber identity (IMSI) number and its related key, which are used to identify and authenticate subscribers on mobile telephony devices (such as mobile phones and computers). It is also possible to store contact information on many SIM cards.

The speaker 120 outputs sound-related results processed by the processor 102. The microphone 122 receives sound-related inputs to be used by the processor 102.

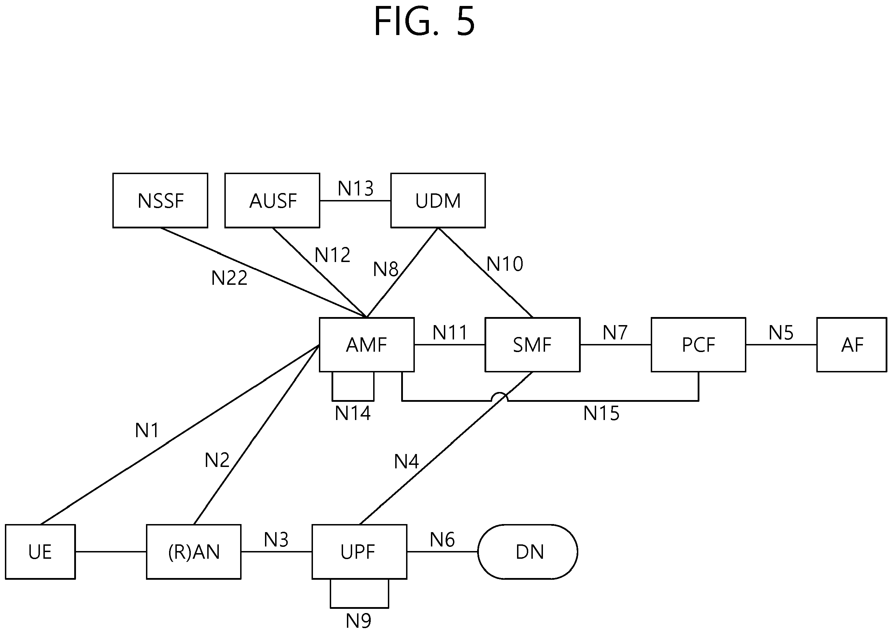

**FIG. 5** **shows examples of 5G system architectures to which implementations of the present specification are applied.**

The 5G system (5GS; 5G system) structure consists of the following network functions (NFs).
- AUSF (Authentication Server Function)
- AMF (Access and Mobility Management Function)
- DN (Data Network), e.g., operator services, internet access or third-party services
- USDF (Unstructured Data Storage Function)
- NEF (Network Exposure Function)
- I-NEF (Intermediate NEF)
- NRF (Network Repository Function)
- NSSF (Network Slice Selection Function)
- PCF (Policy Control Function)
- SMF (Session Management Function)
- UDM (Unified Data Management)
- UDR (Unified Data Repository)
- UPF (User Plane Function)
- UCMF (UE radio Capability Management Function)
- AF (Application Function)
- UE (User Equipment)
- (R)AN ((Radio) Access Network)
- 5G-EIR (5G-Equipment Identity Register)
- NWDAF (Network Data Analytics Function)
- CHF (Charging Function)

In addition, the following network functions may be considered.
- N3IWF (Non-3GPP InterWorking Function)
- TNGF (Trusted Non-3GPP Gateway Function)
- W-AGF (Wireline Access Gateway Function)

FIG. 5 shows the 5G system structure of a non-roaming case using a reference point representation that shows how various network functions interact with each other.

In FIG. 5, UDSF, NEF and NRF are not described for clarity of the point-to-point diagram. However, all network functions shown may interact with UDSF, UDR, NEF and NRF as needed.

For clarity, the connection between the UDR and other NFs (e.g., PCFs) is not shown in FIG. 5. For clarity, the connection between NWDAF and other NFs (e.g. PCFs) is not shown in FIG. 5.

The 5G system architecture includes the following reference points.
- N1: the reference point between the UE and the AMF.
- N2: reference point between (R)AN and AMF.
- N3: Reference point between (R)AN and UPF.
- N4: reference point between SMF and UPF.
- N6: Reference point between UPF and data network.
- N9: reference point between two UPFs.

The following reference points show the interactions that exist between NF services in NF.
- N5: Reference point between PCF and AF.
- N7: reference point between SMF and PCF.
- N8: reference point between UDM and AMF.
- N10: reference point between UDM and SMF.
- N11: reference point between AMF and SMF.
- N12: reference point between AMF and AUSF.
- N13: reference point between UDM and AUSF.
- N14: reference point between two AMFs.
- N15: Reference point between PCF and AMF in case of non-roaming scenario, and reference point between PCF and AMF of visited network in case of roaming scenario.
- N16: reference point between two SMFs (in case of roaming, between the SMF of the visited network and the SMF of the home network)
- N22: reference point between AMF and NSSF.

In some cases, it may be necessary to connect two NFs to each other to service the UE.

### <Multi-modality serviced

Multi-modality Data is defined to describe the input data from different kinds of devices/sensors or the output data to different kinds of destinations required for the same task. Multi-modality Data consists of more than one Single-modality Data, and there is strong dependency among each Single-modality Data. Single-modality Data can be seen as one type of data.

A multi-modality service may require input from multiple UEs for the application server to generate output. Live Event Selective Immersion may be an example of a multi-modality service.

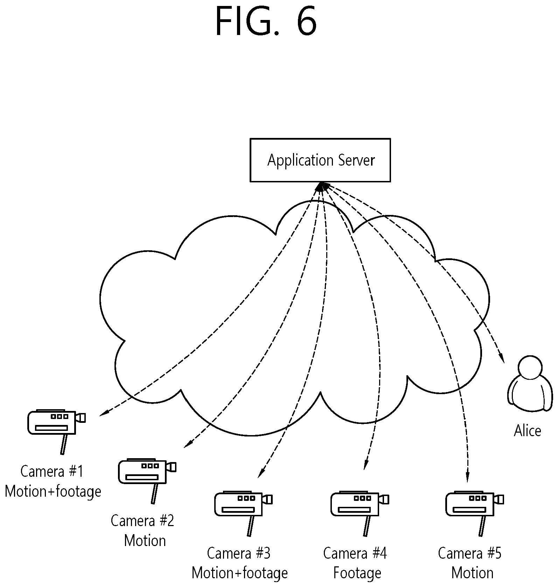

**FIG. 6** **shows an example of Live Event Selective Immersion.**

Each AI camera may interact with the Application Server over 5GS network as a UE.

The user is watching a live event, and optional videos maybe transmitted to the user's UE via the 5GS network.

Footage, etc. can be generated in the application server based on video and audio data collected from the AI camera.

Each AI camera may have the following responsibilities:
- Camera#1: data collection for motion prediction and footage generation, the primary camera placed in a location owning the best view
- Camera#2: data collection for motion prediction, placed in the best location for capturing the motion
- Camera#3: data collection for motion prediction and footage generation
- Camera#4: data collection for footage generation
- Camera#5: data collection for motion prediction
   1. When the live event starts, Camera #1, Camera #2, Camera #3, Camera #4, and Camera #5 may be switched on and registered to the 5GS network to collect video and audio data to conduct Live Event Selective Immersion service.
   2. The application server may inform 5GS that UEs corresponding to Camera#1, Camera#2, Camera#3, Camera#4 and Camera#5 are subject to the service application, and may provide QoS requirements of these UEs and the coordination policies for this multi-modality service for assistance from 5GS.
   3. The QoS requirements and the coordination policy are applied at 5GS. Camera#1, Camera#2, Camera#3, Camera#4 and Camera#5 transmit the collected data over 5GS to the Application Server at the target QoS.
   4. The Application Server may make motion prediction based on data received from Camera#1, Camera#2, Camera#3 and Camera#5, and may generate footages based on data received from Camera#1, Camera#3 and Camera#4.
   5. The Application Server may transmit motion prediction of the object(s) over 5GS to Camera#1, Camera#2, Camera#3 and Camera#5 and transmits footages over 5GS to Alice's UE.
   6. Network congestion may happen from time to time. Based on the coordination policy of the multi-modality service, when the target QoS of Camera#1 can't be guaranteed, 5GS may reduce QoS of Camera#4 to make sure QoS of Camera#1 is guaranteed; when the congestion is relieved, 5GS may increase QoS of Camera#4 while target QoS of Camera#1 is still guaranteed.
   7. The network congestion may get more serious, and target QoS of Camera#2 can't be guaranteed. Since the motion data collected by Camera#2 is mandatory for motion prediction without which the motion prediction can't be made, 5GS may release resources of Camera#2 and Camera#5 based on the coordination policy of the multi-modality service.

When motion prediction doesn't work, the Application Server may request the 5GS network to only guarantee QoS of Camera#1 or to release resources of all the cameras.

### <Problems to be solved in the disclosure of the present specification>

Multiple UEs are connected to an application server that provides multi-modality service. Multiple UEs may each have a target QoS (Quality of Service).

Due to congestion, some or all of the multiple UEs may not satisfy its target QoS.

In this case, if the target QoS of a specific UE is satisfied, the NG-RAN may satisfy the target QoS of the specific UE by lowering the QoS of other UEs.

That is, when the QoS of a certain UE (let's say UE#1) among multiple UEs associated with an application providing a multi-modality service cannot be satisfied/guaranteed (e.g., due to network congestion), the QoS of UE#1 may be satisfied/guaranteed by lowering (or lowering/reducing) the QoS of another UE (let's say UE#2) among the above UEs. This operation may make sense when UE#1 and UE#2 are served by the same NG-RAN.

In order for NG-RAN to perform these operations, information or policies, such as the relationship between UEs and which UE's QoS should be guaranteed first among multiple UEs, are needed,. The problem is that there is currently no concrete plan.

### <Disclosure of the present specification>

The proposed coordinated QoS support plan for multiple UEs may consist of a combination of one or more of the proposed operations/configuration/steps in the present specification.

In the present specification, UE (User Equipment) and terminal may be used interchangeably.

In the present specification, multiple UEs (associated with an application) may be used interchangeably with a group of UEs, UEs belonging to a group, group member UEs, group terminals associated with an application, and UEs belonging to a group associated with an application, multiple UEs related to one/same application, and a set of UEs, etc. The above UEs may be UEs belonging to the same subscriber/user, each UE may have a different subscriber/user, or some UEs may be UEs belonging to the same subscriber/user.

The above application may be an application that provides a multi-modality service. However, it is not limited to this and may be an application that provides various services such as XR service, immersive service, V2X service, and URLLC service, etc.

### [1] Group terminal settings

AF (Application Function) may provide or set one or more of the following information to 5GC in relation to group terminal settings. Such provision or setting may also be made through the NEF. The NF (network function) in which this information is provided or set may be one or more 5GC NFs (e.g., PCF, UDM, UDR). Group terminal settings may be performed in various forms, such as some of the information below being provided or set to UDM and some provided or set to PCF. The information below may be combined or combined with each other. Alternatively, it may be provided in an implicit form. The information below may be provided by AF on a group basis through 5GC, or may be provided individually for each UE in the group. Some of this information may be provided or set after the UE establishes a PDU session.
A) Group identification information: to identify the group. For example, External Group ID, Internal Group ID, etc. may be used.
B) Identification information of group UEs: Identification information of UEs belonging to the group, and can be interpreted as a list of UEs belonging to the group. For example, GPSI, UE address (e.g., IP address information of the UE, etc.) may be used as identification information for each UE.
C) AF identification information: AF identifier, AF application identifier, etc. may be used.
D) PDU session related information: Information related to PDU session creation. For example, PDU session type, DNN, S-NSSAI, etc. may be used.
E) Flow description(s): This may mean information about SDF (service data flow), packet filter information, etc.
F) Application identification information: For example, External Application Identifier, Application Identifier, etc. may be used.
G) Coordinated QoS-related service requirements: This may mean service requirements related to coordination, QoS requirements related to coordination, policy for QoS coordination, coordination policy, service requirements, QoS requirements, QoS requests, etc.

Coordinated QoS-related service requirements may include one or more of the following information from i) to v). This information may be included in a combined or merged form. This information may be configured or included on a per-PDU session basis, a flow description basis, or an application basis.

### i) Priority and importance between UEs in terms of QoS guarantee and satisfaction:

This may be order information regarding which UE among group UEs should have priority in ensuring and satisfying QoS. For example, if a UE group consists of three UEs, UE#1, UE#2, and UE#3, the priority of the UEs may indicate that each QoS of the UEs should be guaranteed and satisfied in the order. As another example, if a UE group consists of three UEs, UE#1, UE#2, and UE#3, priority UE#1 and priority UE#3 are same, QoS of UE#1 and QoS of UE#3 should be be guaranteed and satisfied with the same priority. And, next, QoS of UE#2 should be guaranteed and satisfied. Priority and importance may also be represented as an index value. For example, UE#1 and UE#3 may be represented by 2, and UE#2 can be represented by 5. At this time, if a smaller index value is considered to have higher priority and importance, UE#2 may be judged to have the lowest priority in terms of QoS guarantee and satisfaction.

The order of UEs in the information in the above B) may indicate the priority and importance between UEs in terms of QoS guarantee and satisfaction.

### ii) List of UE(s) that must guarantee QoS

This may mean a list containing identification information about UE(s) whose QoS should not be lowered. Alternatively, it may mean a list containing identification information about UE(s) that require restoration or recovery (within a short time) after lowering the QoS.

### iii) List of UE(s) whose QoS can be lowered

This may mean a list containing identification information about UE(s) that can be provided with lowered QoS when it is difficult to guarantee and satisfy all QoSs.

Information (may be Alternative Service Requirements) on alternative services or QoS requirements for these UE(s) may also be provided.

### iv) List of UE(s) that can preempt the QoS of other UEs (or have pre-emption capability) among UEs in the group

It may be allowed to lower the QoS of other UE(s) for UE(s) belonging to this list if their QoS is not guaranteed and satisfied. As a result, QoS for the UE(s) belonging to this list may be guaranteed and satisfied. This can be interpreted as pre-emption or selection of resources (QoS-related resources) allocated to other UE(s).

Other UE(s) whose QoS is lowered (or whose allocated resources are preempted) may be selected from the following.
- Select from UE(s) that do not belong to this list
- Select among low priority UE(s) based on i) above
- Select from among UE(s) belonging to iii) above
- Select from UE(s) belonging to v) below

### v) List of UE(s) whose QoS can be pre-empted among UEs belonging to the group

UE(s) belonging to this list may lower their own QoS if the QoS of other UEs is not guaranteed and satisfied. As a result, QoS for the other UEs may be guaranteed and satisfied. This may be interpreted as allowing other UEs to pre-empt or select resources (QoS-related resources) allocated to the UE.

vi) A list of UE(s) that can release or remove QoS Flow (or release or remove QoS, or release or remove resources allocated to QoS Flow) when QoS cannot be satisfied and guaranteed.

The reason why the QoS cannot be satisfied and guaranteed above may be because it was decided to lower or reduce the QoS to guarantee QoS for other UEs, or even if this is not the case, the QoS cannot be satisfied and guaranteed regardless of other UEs due to network congestion, etc.

### H) Information requesting notification when QoS is lowered, QoS flow is released or removed, or when lowered QoS is increased or restored to its original state

I) Area or location information to which Coordinated QoS can be applied: For example, various area or location information such as coordinate information, Cell ID list, TAI list, etc. may be used. If the area or location information provided by AF is not 5GS-based (or 3GPP-based) area or location information (e.g., coordinate information), it may be changed to 5GS-based (or 3GPP-based) area or location information(e.g., Cell ID list, TAI list) by 5GC NF such as NEF, etc.

J) Time information to which Coordinated QoS can be applied: For example, various time information may be used, such as a specific time zone (start time ~ end time), what time is the minute ~ what time is the minute every day, what day of the week, how many days each month, etc.

K) Group-related service requirements: These are service requirements for the group itself and may mean group-related QoS requirements, group-related policies, group-related QoS requests, etc. This information may also be provided as part of information G) above.

This information may be provided by AF, but may also be determined by 5GC (e.g., PCF, NEF, etc.).

Group-related service requirements may include one or more information among the following i) - v): This information may be included in a combined or merged form. This information may be configured or included by flow description or by application.
i) Priority or importance of this group in terms of QoS guarantee and satisfaction: This priority or importance may be expressed as an index value. For example, the priority level may be utilized in the existing ARP (Allocation and Retention Priority), and in this case, it may be set to one of the values from 1 to 15. Value 1 may indicate the highest priority.
ii) Whether it is possible to pre-emption the QoS of other UEs (i.e., UEs that do not belong to the Coordinated QoS group) (or whether there is a pre-emption capability)
iii) Whether it is possible to pre-emption the QoS of other groups (i.e., UE(s) belonging to other Coordinated QoS groups) (or whether there is pre-emption capability)
iv) Whether the QoS of UE(s) belonging to this group can be preempted by other UEs (i.e., UEs that do not belong to the Coordinated QoS group)
v) Whether the QoS of UE(s) belonging to this group can be pre-empted by another group (i.e., another Coordinated QoS group)

Even without iv) above, if the QoS of a UE cannot be guaranteed and satisfied based on i), the UE may pre-empted or selected resource of one or more UEs among UEs with lower priority than the UE.

Lowering QoS may be interpreted as reducing QoS (QoS level). Alternatively, lowering the QoS may be interpreted as satisfying replaceable service requirements or replaceable QoS requirements.

The fact that the above-mentioned QoS cannot be guaranteed may be interpreted as the service requirements or QoS requested by the AF or application cannot be guaranteed. Alternatively, the inability to guarantee QoS may be interpreted as the inability to guarantee the most desirable service requirements or QoS for application or service provision.

The inability to guarantee the above-mentioned QoS may be interpreted as the inability to guarantee or satisfy one or more of the performance KPIs such as GFBR, PDB, and PER for QoS Flow.

The above-described group terminal settings may be used by expanding the conventional group-related settings (e.g., 5G-VN group-related settings) and QoS information settings (e.g., AF session with required QoS procedure), or may be used by defining a new setting procedure.

In addition, for the coordinated QoS support method for multiple UEs proposed in this specification, conventional group-related settings, QoS information settings, etc. may be performed together.

In this specification, AF may be used interchangeably with Application Server (AS).

Regarding group terminal settings, instead of AF providing and setting the above information (i.e., information about group terminals) to 5GC, information about group terminals may be stored in 5GC (e.g., network administrator sets and save). Alternatively, some information may be provided and set by AF to 5GC and some information may be stored in 5GC.

The group may be referred to as a MM (Multi-Modality) group, MMSer (Multi-Modality Service) group, CQoS (Coordinated QoS) group, etc.

Some or all of the information about the group terminal may be acquired by one or more SMFs serving PDU sessions of UE(s) belonging to the group. The SMF may obtain the information and setting from the NF(s). The information may be in the form of information required to operate/serve a PDU session. For example, when the SMF is obtained from the PCF, the SMF may obtain with the form of PCC rules, QoS Flow-related information, QoS-related information, or QoS parameter information. As another example, when obtaining from UDM, the SMF may obtain with the form of subscriber information. As another example, when obtaining from UDR, the SMF may obtain with the form of service parameters.

### [2] Support for Coordinated QoS

### [2-0] SMF receives a message that QoS cannot be guaranteed and satisfied from NG-RAN for one terminal among group terminals

Assume that the SMF receives a message from the NG-RAN for one UE (first UE) of the UE group that the QoS of the corresponding UE cannot be guaranteed and satisfied. Transmitting this message from the NG-RAN to the SMF may performed because it is indicated when the SMF sets up a PDU session and QoS flow for the UE or provides related information (e.g., when creating a PDU session, modifying a PDU session, adding a QoS flow, modifying a QoS flow).

In the above, the reason and/or time for the NG-RAN to transmit a message to the SMF that QoS cannot be guaranteed/satisfied for the first UE may be one or more of the following:
- In case QoS cannot be satisfied and guaranteed for the first UE: In this case, the NG-RAN determines that QoS for the first UE may not be satisfied/guaranteed due to congestion or lack of resources and transmits the message to the SMF accordingly. After transmitting the message, the NG-RAN may or may not lower the QoS for the first UE.
- In case QoS for the first UE cannot be satisfied/guaranteed: In this case, the NG-RAN may determine that QoS for the first UE cannot be satisfied/guaranteed due to congestion or lack of resources, and may lower QoS for the first UE. Then, the message may be transmitted via SMF.
- After lowering the QoS for the first UE: In this case, the NG-RAN may lower the QoS for the first UE due to congestion or lack of resources. Then, the message may be transmitted via SMF.

The information that the QoS cannot be guaranteed or satisfied may be for a specific QoS Flow. Alternatively, it may be for a PDU session or for a UE.

As the conventional QNC is extended to Non-GBR QoS flows, NG-RAN may transmit a message to SMF if QoS cannot be guaranteed and satisfied not only for GBR QoS flows but also for Non-GBR QoS flows.

The message, which is that the QoS cannot be guaranteed and satisfied for one UE among the group terminals received by the SMF, from the NG-RAN may be a message sent by the NG-RAN to the SMF for the GBR QoS flow as part of the conventional QNC (QoS Notification Control). Alternatively, it may be a newly defined procedure or message (only for GBR QoS Flow or for both GBR and Non-GBR QoS Flow) for the method proposed in this specification.

The message sent by NG-RAN may be transmitted to SMF through AMF.

### [2-1] SMF uses one message to instruct NG-RAN to lower QoS for the second UE(s) and restore/recover QoS for the first UE(s)

As described in [2-0] above, the SMF may receive a message from the NG-RAN that QoS cannot be guaranteed and satisfied for the first UE. In this case, the SMF may recognize or determine one or more of 1) to 3) based on the information described in the [1] above.
1) Recognition that the first UE is a UE belonging to a terminal group
2) Whether the QoS of the first UE should be guaranteed, or
   Whether the QoS of other UE(s) belonging to the terminal group can be lowered or the QoS Flow of other UE(s) can be released or removed to ensure and satisfy the QoS of the first UE.
3) If the 2) above is possible, select or determine another UE(s) (let's call it the second UE(s)) to lower the QoS or release or remove the QoS Flow.

At this time, the first UE and the second UE(s) may be UEs served by the same NG-RAN. SMF may obtain information on the serving NG-RAN of the UEs from AMF. Whether this NG-RAN information or serving NG-RAN is the same may be determined through the identification information of the NG-RAN, or may be inferred through cell ID information and/or TAI information where the UE is located. This applies throughout the present specification.

When the 3) above is performed, the SMF may transmit a message containing one or more of the information a) to c) to the NG-RAN.
a) Information instructing the second UE to lower the QoS or release or remove the QoS

### Flow:

The above information may include one or more of identification information for the second UE, PDU session information (e.g., PDU session ID), QoS flow information (e.g., QFI), and may include information indicating whether to lower QoS or release or remove QoS Flow(which may be provided per PDU session or per QoS flow (if multiple QoS flow information is provided)).

When the QoS is instructed to be lowered above, information on what level it can be lowered (or alternative QoS level or information) may be provided.

In the above, the information indicating whether to lower QoS or release or remove QoS Flow may be explicit or implicit.

The second UE may be multiple UEs. Selecting multiple second UEs in this way may be the case in [1] above where the AF includes information indicating that multiple UEs can be selected when setting or providing group terminal-related information. Alternatively, since resources obtained by lowering the QoS of one UE or releasing/removing the QoS flow are not sufficient to restore/recover the QoS of the first UE, multiple UEs may be selected.

Identification information for the second UE may be provided explicitly or implicitly.

### b) Information instructing to restore or restore QoS for the first UE to its original state:

The above information may include one or more of identification information for the first UE, PDU session information (e.g., PDU session ID), QoS flow information (e.g., QFI), and may include information instructing to restore or restore QoS.

In the above, the information instructing to restore or restore QoS may be explicit or implicit.

Identification information for the first UE may be provided explicitly or implicitly.

### c) Identification information about the group to which the first UE and the second UE(s) belong

Messages transmitted from SMF to NG-RAN may be transmitted through AMF. The SMF may include part of a) and/or b) information in the parameter part that the AMF understands in order to allow the AMF to deliver the message to the correct NG-RAN.

The message that the SMF transmits to the NG-RAN may be in the form of a response message to a message that QoS cannot be guaranteed or satisfied from the NG-RAN for the first UE.

The SMF may interact with the PCF to recognize/determine 1) to 3) above and/or generate a message to be transmitted to the NG-RAN.

When the NG-RAN receives the message from the SMF, based on this, it may lower the QoS for the second UE(s) or release or remove the QoS flow for the second UE(s). And, the NG-RAN may restore or recover QoS for the first UE. In addition, the NG-RAN may transmit a response message to the message sent by the SMF to the SMF.

The operation of [2-1] may be possible as the same SMF serves the PDU session of the first UE and the PDU session of the second UE(s). Alternatively, this may be possible as the same SMF serves the PDU session of the group to which the first UE belong and the PDU session of the group to which the second UE(s) belong. Accordingly, for the above group, UEs belonging to this group may be served by the same SMF when establishing a PDU session. For the above group, when UEs belonging to this group establish a PDU session, it is possible that the same SMF is selected based on DNN/S-NSSAI information associated with the PDU session, subscriber information of the UEs, AMF configuration information, etc. In this way, having the same SMF serve the PDU sessions of group terminals may also be applied for [2-2] below.

### [2-2] The SMF uses a separate message to instruct NG-RAN to lower the QoS for the second UE(s) and to restore/recover the QoS for the first UE.

When the SMF receives a message that QoS cannot be guaranteed or satisfied from the NG-RAN for the first UE as described in [2-0] above, based on the information described in the above [1], the SMF may recognize or determine one or more of the following:
1) Recognition that the first UE is a UE belonging to a group terminal
2) Whether the QoS of the first UE must be guaranteed, or whether the QoS of other UE(s) belonging to the group terminal can be lowered or the QoS Flow can be released/removed to guarantee/satisfy the QoS of the first UE.
3) If the above 2) is possible, select/determine another UE(s) (let's call it the second UE(s)) to lower the QoS or release/remove the QoS Flow (in this case, the first UE and the second UE (s) are served by the same NG-RAN). SMF may obtain serving NG-RAN information of the UEs from AMF.

When the above 3) is performed, SMF may transmit the following messages to NG-RAN. The messages below may be transmitted simultaneously or sequentially (Message #1, Message #2, or vice versa).

Message #1) Message instructing to lower QoS or release or remove QoS Flow for the second UE:
Message #1 may include one or more of identification information for the second UE, PDU session information (e.g., PDU Session ID), QoS flow information (e.g., QFI), and may include information(this may be provided per PDU Session or per QoS Flow (if multiple QoS Flow information is provided)) indicating whether to lower QoS or release or remove QoS Flow.

Additionally, message #1 may include identification information about the group to which the first UE and the second UE(s) belong.

Additionally, message #1 may include information indicating that a message instructing to restore or restore QoS is transmitted (together).

Additionally, message #1 may include information instructing to keep/hold available QoS resources by lowering the QoS for the second UE or releasing or removing the QoS Flow for the second UE.

Additionally, message #1 may include serial number or identification information for the message (message transmission operation).

When the message instructs to lower QoS, the message may include information on what level it can be lowered (or alternative QoS level/information).

In the message, information indicating whether to lower QoS or release or remove QoS Flow may be explicit or implicit.

The second UE may be multiple UEs. Selecting multiple second UEs in this way may be the case in [1] above where the AF includes information indicating that multiple UEs can be selected when setting or providing group terminal-related information. Alternatively, since resources obtained by lowering the QoS of one UE or releasing/removing the QoS flow are not sufficient to restore/recover the QoS of the first UE, multiple UEs may be selected.

If the second UE are multiple UEs, the SMF may transmit message #1 to the NG-RAN instructing to lower the QoS for each UE or to release or remove the QoS Flow for each UE.

The identification information for the second UE included in message #1 may be explicit or implicit.

Message #2) Message instructing to restore or restore QoS to the original state for the first UE:
Message #2 may include one or more of identification information for the first UE, PDU session information (e.g., PDU Session ID), QoS flow information (e.g., QFI), and may include information instructing restore or recover QoS for the first UE.

Additionally, message #2 may include identification information about the group to which the first UE and the second UE(s) belong.

Additionally, Message #2 may include information indicating that a message instructing to lower QoS or release or remove QoS Flow is transmitted (together).

Additionally, message #2 may include information instructing to use or allocate, for the first UE, the available QoS resources by lowering the QoS for the second UE(s) or releasing or removing the QoS Flow for the second UE(s).

Additionally, message #2 may include identification information or serial number for the message (message transmission operation). This identification information or serial number may be the same value or information as the identification information or serial number included in message #1).

In the above, the information instructing to restore or recover QoS for the first UE may be explicit or implicit.

The identification information for the first UE included in message #2 may be explicit or implicit.

Messages transmitted from SMF to NG-RAN may be transmitted through AMF. In order to enable AMF to deliver the message to the correct NG-RAN, the SMF may include part of the information included in message #1) and/or part of the information included in message #2) in the parameter part understood by AMF..

The message transmitted from the SMF to the NG-RAN may be in the form of a response message to a message that QoS from the NG-RAN to the SMF cannot be guaranteed or satisfied for the first UE.

The SMF may interact with the PCF to make the above recognition/decision and/or generate a message to be transmitted to the NG-RAN. Regarding interaction with PCF, please refer to the cases where different SMFs transmit message #1) and message #2) described below.

When the NG-RAN receives message #1) and message #2) from the SMF, based on this, it may lower the QoS for the second UE(s) or releases/removes the QoS Flow, and recovery/restore QoS to the original for the first UE(s). Additionally, the NG-RAN may transmit response messages to the messages sent by the SMF (each individually or in an integrated form) to the SMF.

The operation of the NG-RAN may be interpreted as not using QoS resources made available by lowering the QoS for the second UE(s) or releasing/removing the QoS flow for UEs other than the first UE(s).

The message #1) and message #2) may be generated by different SMFs and transmitted to the NG-RAN. For example, the SMF (first SMF) that receives a message from the NG-RAN that the QoS for the first UE cannot be satisfied may transmit the message #2) to the NG-RAN. The SMF (second SMF) serving the second UE may transmit the message #1) to the NG-RAN.

The PCF may instruct the SMF to notify when QoS for the first UE is not guaranteed/satisfied. After performing 1) or 2) described above, the first SMF may transmit a message to the PCF notifying that QoS is not guaranteed/satisfied for the first UE. The notification message may be interpreted as including a request for a QoS restoration/recovery operation for the first UE. The notification message may be interpreted as including a request for an operation to lower QoS or release/remove QoS Flow for the second UE.

When the PCF receives the message from the first SMF, it may select or determine another UE(s) (let's call it the second UE(s)) to lower the QoS or release/remove the QoS Flow. At this time, the first UE and the second UE(s) are served by the same NG-RAN. PCF may obtain serving NG-RAN information of the UEs from SMF/AMF.

The PCF selects/determines the second UE(s). And, the PCF may transmit, to the SMF serving the second UE, message requesting that the QoS of the second UE be lowered or QoS flow of the second UE be released/removed. If multiple second UEs are selected, the request message may be sent to SMF(s) serving each second UE. The request message may include information needed for the second SMF to transmit message #1).

The second SMF may transmit message #1) to the NG-RAN based on the request message received from the PCF.

### [2-3] (The difference compared to the above-mentioned [2-0] is that) NG-RAN transmits, to the SMF, a message that the QoS of any UE has not yet been lowered, but is scheduled to be lowered.

If it is predicted/anticipated/recognized/determined that QoS for the first UE will not be satisfied/guaranteed, and/or it is needed to lower QoS for the first UE, and/or it is predicted/anticipated/recognized that the QoS for the first UE will be lowered, NG-RAN may transmit a message notifying this to the SMF. The message sent by NG-RAN may be transmitted to SMF through AMF.

This may be because the SMF requested NG-RAN to provide information related to the PDU session or QoS flow for the first UE (e.g., when creating a PDU Session, modifying a PDU Session, adding a QoS Flow, modifying a QoS Flow, etc.). Additionally, the AF may have requested the PCF to notify when it plans to lower the QoS of a certain UE. The PCF may have requested the SMF to notify when it plans to lower the QoS of a certain UE. SMF may make this request to NG-RAN.

The information that the QoS is predicted/expected/recognized/determined to not be satisfied/guaranteed may be for a specific QoS flow, a specific PDU session, or a specific UE.

The above message may be an extension of the conventional QNC (QoS Notification Control) (only for GBR QoS Flow or for both GBR and Non-GBR QoS Flow), and may be newly defined procedure/message(for GBR QoS Flow only or for both GBR and Non-GBR QoS Flow) for the method proposed in this specification.

The message sent by the NG-RAN may not be about the QoS of the first UE. The message sent by the NG-RAN may be intended to provide the SMF with information that the network has become congested or that QoS resources have become insufficient.

And, when the SMF provides NG-RAN with information related to the PDU session/QoS flow for the first UE (e.g., when establishing a PDU Session, modifying a PDU Session, adding a QoS Flow, modifying a QoS Flow, etc.), the SMF provides NG-RAN with information instructing to guarantee or not to lower QoS explicitly or implicitly (e.g., a list of UE(s) that must guarantee QoS).

In [2-1] to [2-2], the information (i.e., the b) to the message (i.e., the message #2)) instructing to restore/restore the QoS to the first UE may be interpreted as information or a message instructing to maintain QoS.

Alternatively, information b) of [2-1] and message #2) of [2-2] may not be transmitted.

For the interaction between SMF and PCF, refer to [2-2] above.

When the NG-RAN receives the information or message from the SMF, the NG-RAN may perform an operation to lower the QoS or release/remove the QoS Flow for the second UE(s) based on this. Additionally, NG-RAN may perform an operation to maintain QoS for the first UE.

Additionally, NG-RAN may transmit a response message to the message sent by the SMF to the SMF.

The operation of the NG-RAN may be interpreted as not using QoS resources, which is made available by lowering the QoS for the second UE(s) or releasing/removing the QoS Flow, for UEs other than the first UE(s).

In the above [2-1] to [2-3], if QoS is lowered or QoS Flow is released/removed, this may be notified to AF. This may be because AF requested this to be notified in [1] above. If the SMF determines the second UE, the SMF may inform the PCF of the above information, and the PCF may then inform the AF of the above information. If the PCF determines the second UE, the above information may be notified by the PCF to the AF.

For the UE whose QoS has been lowered, QoS may later be restored/recovered (e.g., network congestion is resolved). In this case, NG-RAN may notify SMF about this. Then, SMF may notify this to AF through PCF.

In addition to the information a) in [2-1] or message #1) in [2-2], information instructing/requesting to restore/restore QoS to the original state as a priority for the second UE may be included if possible. Accordingly, when available QoS resources are available, the NG-RAN may make efforts to preferentially restore/recover the QoS of the second UE among UEs for which the desired/requested/desired QoS is not currently guaranteed.

In [2-0] and [2-3] above, the case when the NG-RAN transmits a message to the SMF regarding the QoS of the first UE may include a case where QoS must be allocated to the first UE(or for the QoS Flow of the first UE), but the requested QoS cannot be allocated due to lack of resources.

The [2] above described the case where the first UE and the second UE are served by the same NG-RAN, but this may also be applied when they are served by different NG-RANs.

### [3] Coordinated QoS support: NG-RAN takes the lead

When SMF provides PDU Session/QoS Flow-related information to NG-RAN for a UE belonging to a group (e.g., when creating a PDU Session, modifying a PDU Session, adding a QoS Flow, modifying a QoS Flow, etc.), one or more of the following:
Information may be provided.
- Group identification information
- Information indicating that Coordinated QoS support is needed
- Whether the QoS of this UE should be guaranteed, or whether it is okay to lower the QoS of this UE or release/remove the QoS Flow this UE (this information may be provided by QoS Flow, by PDU Session, or by UE)
- If it is indicated above that QoS can be lowered, information on to what level it can be lowered (or alternative QoS level/information)
- Information instructing to request confirmation/confirmation before lowering QoS or releasing/removing QoS Flow
- Information instructing to notify after lowering QoS or releasing/removing QoS Flow

The SMF may configure the above-described information based on information obtained from one or more of PCF, UDM, and UDR. The information may be based on information set/provided by the AF described in the [1] above in relation to the terminal group.

NG-RAN may decide which UE to lower QoS or release/remove QoS Flow when QoS resources (radio resources) become insufficient for reasons such as network congestion.

At this time, NG-RAN may perform an operation to lower QoS for UEs whose QoS can be lowered based on the information provided by the SMF. Alternatively, the NG-RAN may perform an operation to release/remove QoS Flow for UEs that can release/remove QoS Flow based on the information provided by the SMF. This operation may be interpreted as continuing to maintain QoS for UEs that must guarantee QoS.

If the NG-RAN lowers the QoS or releases/removes the QoS Flow, and if the NG-RAN increases or restores the lowered QoS, the NG-RAN may notify to the SMF. Additionally, the SMF may notify this to the PCF, and the may notify this to the AF. This procedure may be based on information H) in [1] above.

AF may change the group terminal setting information in [1] above based on the above notification and provide it to 5GC.

If NG-RAN decides to lower QoS or release/remove QoS Flow, it may notify SMF of this and perform the procedure after receiving confirmation from SMF.

The following drawings were prepared to explain a specific example of the present specification. Since the names of specific devices or specific signals/messages/fields described in the drawings are provided as examples, the technical features of this specification are not limited to the specific names used in the drawings below.

### 1. Embodiment 1 - Reflection of [1] and [3]

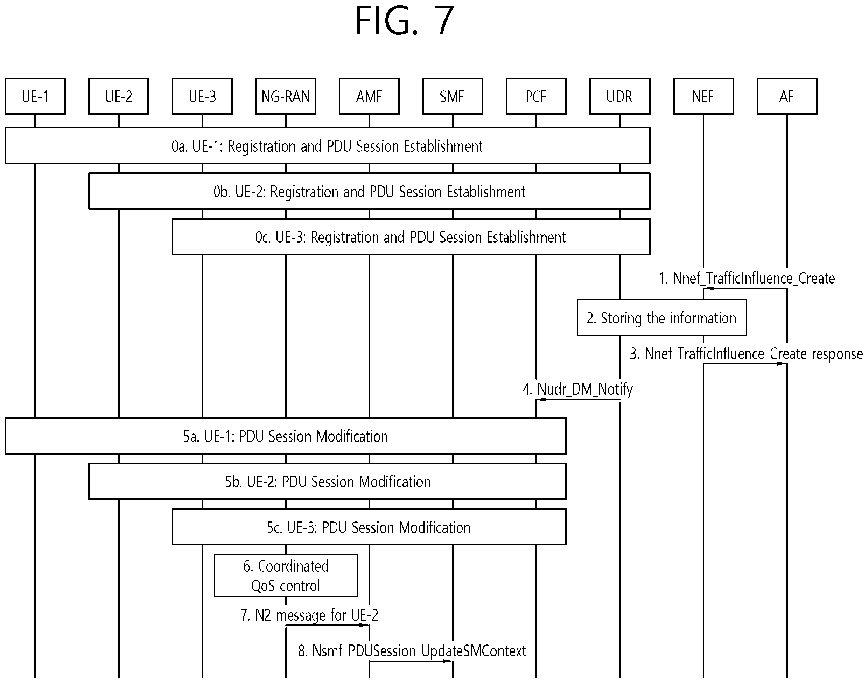

**FIG. 7** **shows the first embodiment of the present specification.**

In this embodiment, AF may provide information about groups requiring Coordinated QoS support in 5GC on a group basis.

It is assumed that UE-1, UE-2, and UE-3 are terminals belonging to the same terminal group with respect to an application that provides multi-modality service.

Although the SMF and PCF serving UE-1, UE-2, and UE-3 are all shown as the same, they may be different.

Step 0a) UE-1 may perform registration and PDU session establishment. PCF may subscribe to the notification service with UDR to be notified when an AF request occurs or changes in relation to the group to which UE-1 belongs.

Step 0b) UE-2 may perform registration and PDU session establishment. The PCF may subscribe to the notification service with UDR to be notified when an AF request occurs/changes in relation to the group to which UE-2 belongs. Since subscription has already been performed for the group in step 0a, there is no need to subscribe additionally.

If the PCF for UE-2 is different from the PCF for UE-1, the PCF for the group may perform subscription with UDR.

Step 0c) UE-3 may perform registration and PDU session establishment. The PCF may subscribe to the notification service with UDR to be notified when an AF request occurs/changes in relation to the group to which UE-3 belongs. Since subscription has already been performed for the group in step 0a, there is no need to subscribe additionally.

If the PCF for UE-3 is different from the PCF for UE-1, the PCF for the group may perform subscription with UDR.

Step 1) AF may provide an AF request to NEF. The AF request includes information related to group terminal settings. Regarding group terminal settings, contents of [1] may be applied. AF may use the Nnef_TrafficInfluence_Create service operation, another Nnef service operation, or a newly defined Nnef service operation.

It is assumed that the list of UE(s) that must guarantee QoS includes UE-1 and UE-3, and that the list of UE(s) that can lower QoS includes UE-2. For UE-2, information on alternative services or QoS requirements (ex. Alternative Service Requirements) may be provided.

Steps 2-3) NEF may store AF request information received from AF in UDR and respond to AF.

Step 4) PCF may be notified from UDR about AF request information.

Step 5a) A modification procedure for UE-1's PDU session may be performed to add a QoS flow to support the multi-modality service-related application. At this time, the PCF may generate a PCC rule including Coordinated QoS support information in relation to the QoS flow based on the AF request information provided in the step 4 and provide it to the SMF. The SMF provides NG-RAN with a QoS profile including Coordinated QoS support information in relation to the QoS Flow. The contents of Coordinated QoS support may be replaced with the above-mentioned [3].

Step 5b) A modification procedure for UE-2's PDU session may be performed to add a QoS Flow to support the multi-modality service-related application. At this time, the PCF may generate a PCC rule including Coordinated QoS support information in relation to the QoS flow based on the AF request information provided in the step 4 and provide it to the SMF. The SMF provides NG-RAN with a QoS profile including Coordinated QoS support information in relation to the QoS Flow. The contents of Coordinated QoS support may be replaced with the above-mentioned [3]. For UE-2, information on alternative QoS levels used when lowering QoS may be provided through Alternative QoS profiles.

Step 5c) A modification procedure for UE-3's PDU session may be performed to add a QoS Flow to support the multi-modality service-related application. At this time, the PCF may generate a PCC rule including Coordinated QoS support information in relation to the QoS flow based on the AF request information provided in the step 4 and provide it to the SMF. The SMF provides NG-RAN with a QoS profile including Coordinated QoS support information in relation to the QoS Flow. The contents of Coordinated QoS support may be replaced with the above-mentioned [3].

In steps 5a to 5c, the PCF may include Coordinated QoS support information using an existing ARP, may newly define and include an ARP for a group requiring Coordinated QoS support, or may define and include new parameters.

Step 6) As NG-RAN resources become insufficient (e.g., as a result of measuring queuing delay, system load, congestion load/level/status, etc.), NG-RAN may determine to need to perform QoS control. Based on the information provided from the SMF in steps 5a to 5c, NG-RAN may determine UE-1, UE-2, and UE-3 as a group requiring Coordinated QoS control. Based on the Coordinated QoS support information of UEs belonging to the group, it may be determined that QoS should be maintained for UE-1 and UE-3. Additionally, in order to maintain the QoS of UE-1 and UE-3, UEs for which QoS may be lowered or QoS flows may be released may be selected or determined. NG-RAN may an decide to lower the QoS for UE-2 and to what level to lower the QoS based on Alternative QoS profiles.

Ultimately, when NG-RAN must perform QoS control due to a lack of resources, for UEs belonging to a group requiring Coordinated QoS support, it may be interpreted to perform QoS control by group unit(i.e., based on differentiated QoS control information/policy between UEs in the group).

Steps 7-8) NG-RAN may inform the SMF of information about the level to which the QoS has been lowered for UE-2.

### 2. Embodiment 2 - Reflection of [1] and [3]

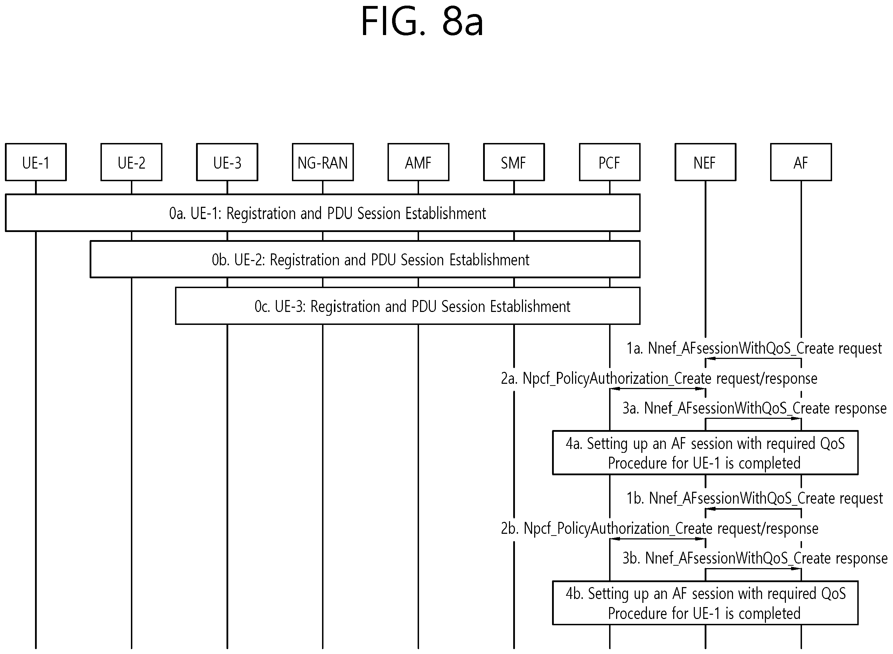

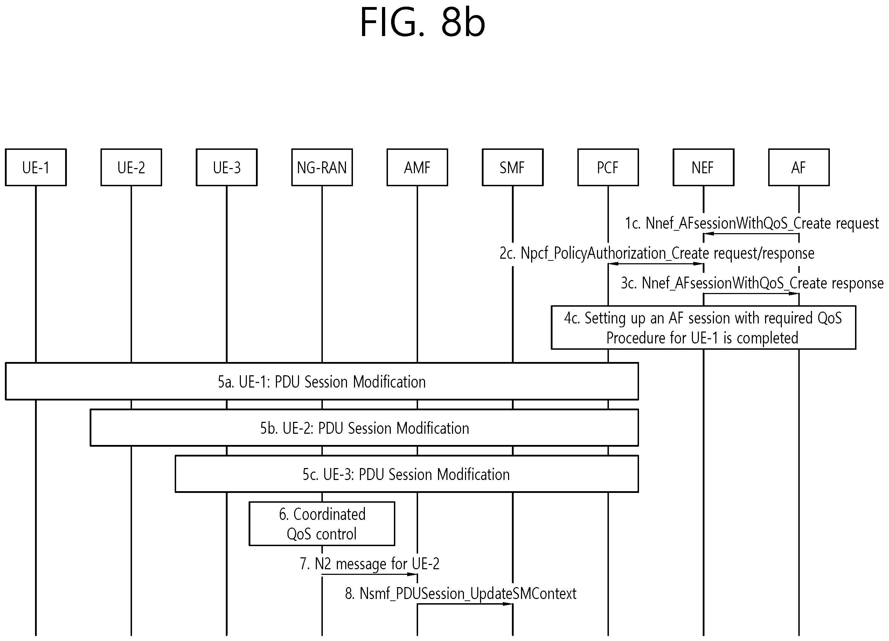

**FIGS.8a** **and** **8b** **show a second embodiment of the present specification.**

In this embodiment, AF may provide information about a group requiring Coordinated QoS support through 5GC for each UE belonging to the group.

It is assumed that UE-1, UE-2, and UE-3 are terminals belonging to the same terminal group with respect to an application that provides multi-modality service.

Although the SMF and PCF serving UE-1, UE-2, and UE-3 are all shown as the same, they may be different.

Step 0a) UE-1 may perform registration and PDU session establishment.

Step 0b) UE-2 may perform registration and PDU session establishment.

Step 0c) UE-3 may perform registration and PDU session establishment.

Step 1a) AF may provide an AF request to NEF. The AF request includes information related to group terminal settings. The content about group terminal settings may be replaced with the contents of [1]. The AF request may correspond to UE-1 in group terminal setting-related information. For example, information indicating that UE-1 is a UE that must guarantee QoS may be included in the AF request.

Step 2a) NEF may provide PCF with information related to group terminal settings provided by AF regarding UE-1.

Step 3a) NEF may respond with AF.

Step 4a) Setting up an AF session with required QoS procedure may be completed.

Steps 1b-4b) Same as the steps 1a-4a above, but the group terminal setting-related information provided by AF is for UE-2, not UE-1. If it is impossible to satisfy/guarantee QoS for the group to which UE-2 belongs, information indicating that the UE is a UE that can release/remove QoS Flow may be included in the AF request.

Steps 1c-4c) Same as steps 1a-4a above, but the group terminal setting-related information provided by AF is for UE-3, not UE-1. For example, information indicating that UE-3 is a UE that must guarantee QoS may be included in the AF request.

In steps 1a/3a, step 1b/3b, and step 1c/3c, AF may use the Nnef_AFsessionWithQoS_Create service operation, another Nnef service operation, or a newly defined Nnef service operation.

Step 5a) A modification procedure for UE-1's PDU session may be performed to add a QoS flow to support the multi-modality service-related application. At this time, the PCF may generate a PCC rule including Coordinated QoS support information in relation to the QoS flow based on the AF request information provided in the step 2a and provide it to the SMF. The SMF provides NG-RAN with a QoS profile including Coordinated QoS support information in relation to the QoS Flow. The contents of Coordinated QoS support may be replaced with the above-mentioned [3].

Step 5b) A modification procedure for UE-2's PDU session may be performed to add a QoS Flow to support the multi-modality service-related application. At this time, the PCF may generate a PCC rule including Coordinated QoS support information in relation to the QoS flow based on the AF request information provided in the step 2b and provide it to the SMF. The SMF provides NG-RAN with a QoS profile including Coordinated QoS support information in relation to the QoS Flow. The contents of Coordinated QoS support may be replaced with the above-mentioned [3].

Step 5c) A modification procedure for UE-3's PDU session may be performed to add a QoS Flow to support the multi-modality service-related application. At this time, the PCF may generate a PCC rule including Coordinated QoS support information in relation to the QoS flow based on the AF request information provided in the step 2c and provide it to the SMF. The SMF provides NG-RAN with a QoS profile including Coordinated QoS support information in relation to the QoS Flow. The contents of Coordinated QoS support may be replaced with the above-mentioned [3].

In steps 5a to 5c, the PCF may include Coordinated QoS support information using an existing ARP, may newly define and include an ARP for a group requiring Coordinated QoS support, or may define and include new parameters.

Step 6) As NG-RAN resources become insufficient (e.g., as a result of measuring queuing delay, system load, congestion load/level/status, etc.), NG-RAN may determine to need to perform QoS control. Based on the information provided from the SMF in steps 5a to 5c, NG-RAN may determine UE-1, UE-2, and UE-3 as a group requiring Coordinated QoS control. Based on the Coordinated QoS support information of UEs belonging to the group, it may be determined that QoS should be maintained for UE-1 and UE-3. Additionally, in order to maintain the QoS of UE-1 and UE-3, UEs for which QoS may be lowered or QoS flows may be released may be selected or determined. NG-RAN may decide to release or remove QoS Flow for UE-2.

Ultimately, when NG-RAN must perform QoS control due to a lack of resources, for UEs belonging to a group requiring Coordinated QoS support, it may be interpreted to perform QoS control by group unit(i.e., based on differentiated QoS control information/policy between UEs in the group).

Steps 7-8) NG-RAN, which has released or removed the QoS Flow for UE-2, may notify this through SMF.

### 3. Embodiment 3 - Reflection of [1] and [3]

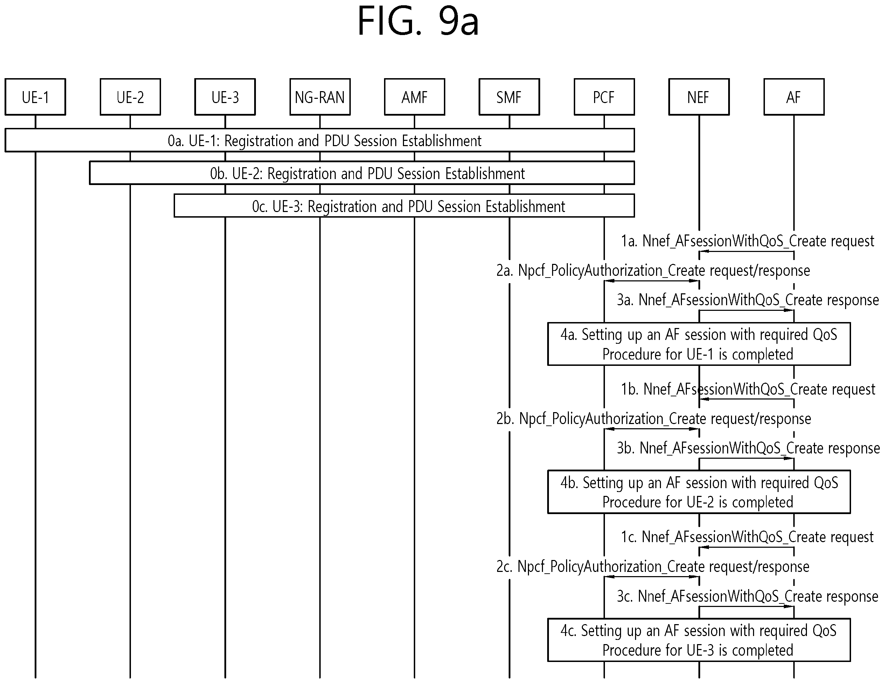

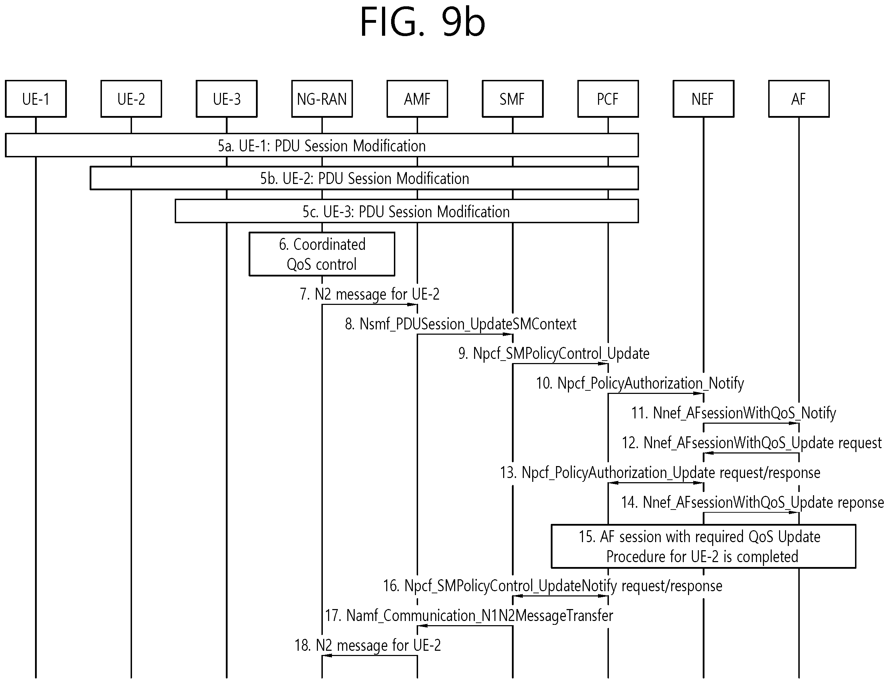

**FIGS. 9a** **and** **9b** **show a third embodiment of the present specification.**

In this embodiment, AF may receive notification of the results of Coordinated QoS control performed on a group requiring Coordinated QoS support (i.e., lowering the QoS of UEs belonging to a group requiring Coordinated QoS support), and then may change information about groups needing Coordinated QoS support based on this and may provide to 5GC.

It is assumed that UE-1, UE-2, and UE-3 are terminals belonging to the same terminal group with respect to an application that provides multi-modality service.

Although the SMF and PCF serving UE-1, UE-2, and UE-3 are all shown as the same, they may be different.

Step 0a) UE-1 may perform registration and PDU session establishment.

Step 0b) UE-2 may perform registration and PDU session establishment.

Step 0c) UE-3 may perform registration and PDU session establishment.

Step 1a) AF may provide an AF request to NEF. The AF request includes information related to group terminal settings. The content about group terminal settings may be replaced with the contents of [1]. The AF request may correspond to UE-1 in group terminal setting-related information. For example, information indicating that UE-1 is a UE that must guarantee QoS may be included in the AF request.

Step 2a) NEF may provide PCF with information related to group terminal settings provided by AF regarding UE-1.

Step 3a) NEF may respond with AF.

Step 4a) Setting up an AF session with required QoS procedure may be completed.

Steps 1b-4b) Same as the steps 1a-4a above, but the group terminal setting-related information provided by AF is for UE-2, not UE-1. If it is impossible to satisfy/guarantee QoS for the group to which UE-2 belongs, information indicating that the UE is a UE that can release/remove QoS Flow may be included in the AF request.

Additionally, information on alternative service/QoS requirements (e.g., Alternative Service Requirements) that can be used when lowering the UE's QoS may be provided.

Steps 1c-4c) Same as steps 1a-4a above, but the group terminal setting-related information provided by AF is for UE-3, not UE-1. For example, information indicating that UE-3 is a UE that must guarantee QoS may be included in the AF request.

In steps 1a/3a, step 1b/3b, and step 1c/3c, AF may use the Nnef_AFsessionWithQoS_Create service operation, another Nnef service operation, or a newly defined Nnef service operation.

Step 5a) A modification procedure for UE-1's PDU session may be performed to add a QoS flow to support the multi-modality service-related application. At this time, the PCF may generate a PCC rule including Coordinated QoS support information in relation to the QoS flow based on the AF request information provided in the step 2a and provide it to the SMF. The SMF provides NG-RAN with a QoS profile including Coordinated QoS support information in relation to the QoS Flow. The contents of Coordinated QoS support may be replaced with the above-mentioned [3].

Step 5b) A modification procedure for UE-2's PDU session may be performed to add a QoS Flow to support the multi-modality service-related application. At this time, the PCF may generate a PCC rule including Coordinated QoS support information in relation to the QoS flow based on the AF request information provided in the step 2b and provide it to the SMF. The SMF provides NG-RAN with a QoS profile including Coordinated QoS support information in relation to the QoS Flow. The contents of Coordinated QoS support may be replaced with the above-mentioned [3].

For UE-2, information on alternative QoS levels used when lowering QoS can be provided as Alternative QoS profiles.

Step 5c) A modification procedure for UE-3's PDU session may be performed to add a QoS Flow to support the multi-modality service-related application. At this time, the PCF may generate a PCC rule including Coordinated QoS support information in relation to the QoS flow based on the AF request information provided in the step 2c and provide it to the SMF. The SMF provides NG-RAN with a QoS profile including Coordinated QoS support information in relation to the QoS Flow. The contents of Coordinated QoS support may be replaced with the above-mentioned [3].

In steps 5a to 5c, the PCF may include Coordinated QoS support information using an existing ARP, may newly define and include an ARP for a group requiring Coordinated QoS support, or may define and include new parameters.

Step 6) As NG-RAN resources become insufficient (e.g., as a result of measuring queuing delay, system load, congestion load/level/status, etc.), NG-RAN may determine to need to perform QoS control. Based on the information provided from the SMF in steps 5a to 5c, NG-RAN may determine UE-1, UE-2, and UE-3 as a group requiring Coordinated QoS control. Based on the Coordinated QoS support information of UEs belonging to the group, it may be determined that QoS should be maintained for UE-1 and UE-3. Additionally, in order to maintain the QoS of UE-1 and UE-3, UEs for which QoS may be lowered or QoS flows may be released may be selected or determined. The NG-RAN may decide to lower the QoS for UE-2 and to what level to lower the QoS for UE-2 based on Alternative QoS profiles.

Ultimately, when NG-RAN must perform QoS control due to a lack of resources, for UEs belonging to a group requiring Coordinated QoS support, it may be interpreted to perform QoS control by group unit(i.e., based on differentiated QoS control information/policy between UEs in the group).

Steps 7-8) The NG-RAN that lowered the QoS for UE-2 may inform the SMF of the level to which the QoS was lowered.

Step 9) SMF that has received notification from NG-RAN may notify this to PCF.

Steps 10-11) PCF, which has received notification from SMF, may notify this to AF.

Step 12) The AF may be notified from 5GC that the QoS of UE-2 belonging to the group requiring Coordinated QoS support has been lowered and to what level the QoS has been lowered. Based on this, AF may decide to change information about the group requiring Coordinated QoS support. In this embodiment, if QoS cannot be satisfied/guaranteed for the group to which UE-2 belong, the AF may determine to change to information indicating that UE-2 is a UE whose QoS flow can be released/removed, instead of information indicating that UE-2 is a UE whose QoS can be lowered.

The AF may provide an AF request containing information related to the changed UE group settings for UE-2 as described above through NEF. The content of AF request may be replaced with [1] described above.

Steps 13-15) Same as steps 2b-4b above.

Step 16) Based on the AF request information provided in step 13, the PCF may create a PCC rule including Coordinated QoS support information related to UE-2's QoS Flow and provide it to the SMF.

Steps 17-18) SMF may provide NG-RAN with a QoS profile including Coordinated QoS support information related to the QoS Flow of UE-2. The contents of Coordinated QoS support may be replaced with the above-mentioned [3].

Afterwards, NG-RAN may perform Coordinated QoS control based on the provided QoS profile, if necessary.

### 4. Embodiment 4 - Reflection of [1] and [3]

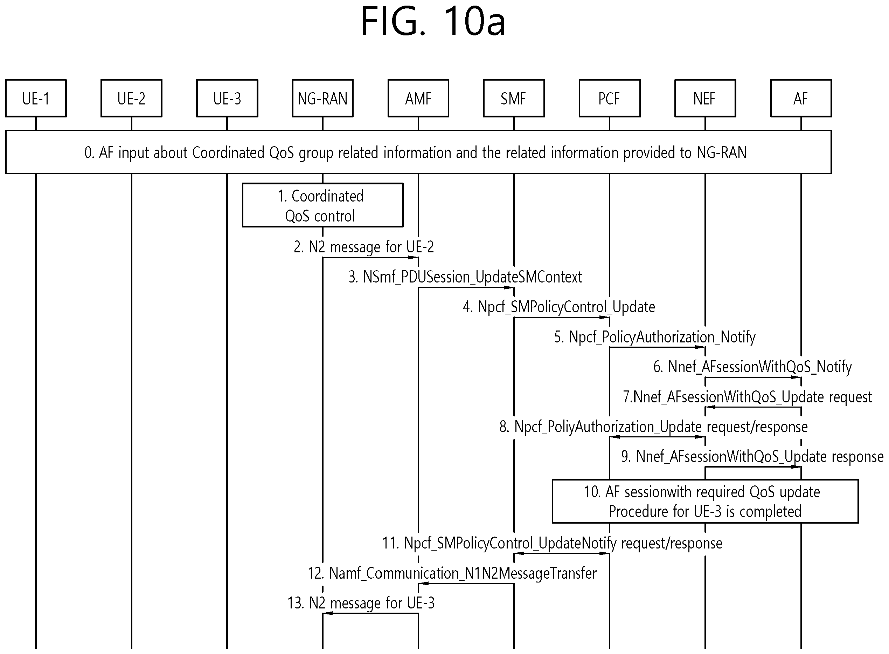

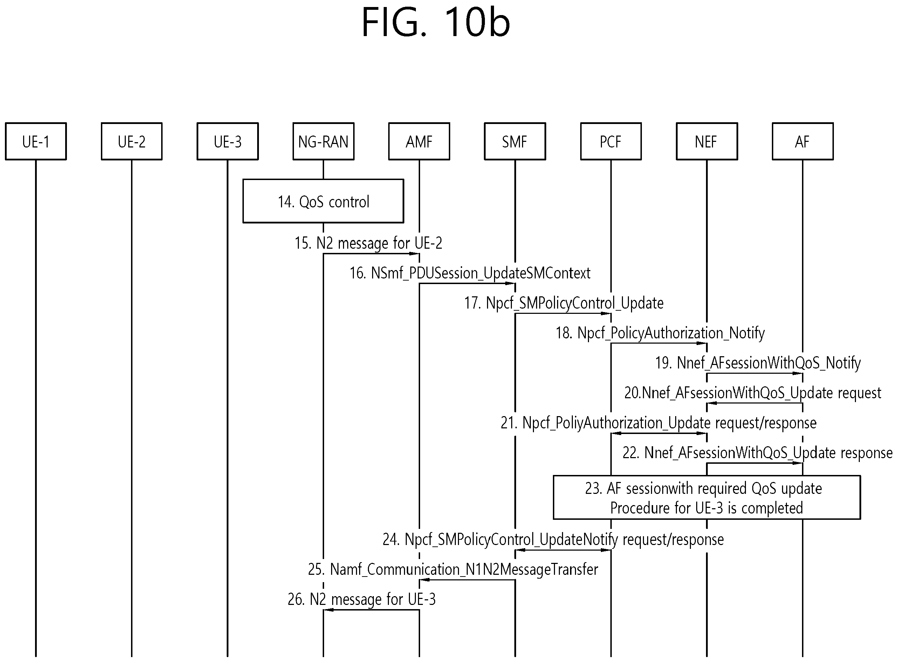

FIGS. 10a and 10b show the fourth embodiment of the present specification.

In this embodiment, AF may receive notification of the results of Coordinated QoS control performed on a group requiring Coordinated QoS support (i.e., lowering the QoS of UEs belonging to a group requiring Coordinated QoS support), and then may change information about groups needing Coordinated QoS support based on this and may provide to 5GC. Afterwards, after the AF may receive notification of the results of Coordinated QoS control performed on a group requiring Coordinated QoS support (i.e., having restored the QoS of UEs belonging to a group requiring Coordinated QoS support), and then may change information about groups needing Coordinated QoS support based on this and may provide to 5GC.

It is assumed that UE-1, UE-2, and UE-3 are terminals belonging to the same terminal group with respect to an application that provides multi-modality service.

Although the SMF and PCF serving UE-1, UE-2, and UE-3 are all shown as the same, they may be different.

Steps 0-6) Same as steps 0a - step 11 of the embodiment 3 described above.

Step 7) The AF may be notified from 5GC that the QoS of UE-2 belonging to the group requiring Coordinated QoS support has been lowered and to what level the QoS has been lowered. Based on this, AF may decide to change information about the group requiring Coordinated QoS support. In this embodiment, if QoS cannot be satisfied/guaranteed for the group to which UE-2 belong, the AF may determine to change to information indicating that UE-3 is a UE whose QoS flow can be lowered, instead of information indicating that UE-3 is a UE whose QoS should be maintained.

The AF may provide an AF request containing information related to the changed UE group settings for UE-2 as described above through NEF. The content of AF request may be replaced with [1] described above.

Steps 8-10) are the same as step 2c-step 4c of the embodiment 3 described above.

Step 11) Based on the AF request information provided in step 8, the PCF may create a PCC rule including Coordinated QoS support information related to UE-3's QoS Flow and provide it to the SMF.

Steps 12-13) SMF may provide NG-RAN with a QoS profile including Coordinated QoS support information related to the QoS Flow of UE-3. The contents of Coordinated QoS support may be replaced with the above-mentioned [3].

Afterwards, NG-RAN may perform Coordinated QoS control based on the provided QoS profile, if necessary.

Step 14) As the resource shortage of NG-RAN is resolved (e.g., as a result of measuring queuing delay, system load, congestion load/level/status, etc.), it may be determined that QoS control should be performed.

Accordingly, NG-RAN may decide to restore QoS to UE-2, which had lowered QoS.

Steps 15-16) NG-RAN, which has restored QoS to UE-2, may notify this through SMF.

Step 17) The SMF that receives the notification from NG-RAN may notify this to the PCF.

Steps 18-19) The PCF that has received notification from SMF can notify this to AF.

Step 20) The AF, which has been notified by 5GC that the QoS of UE-2 belonging to the group requiring Coordinated QoS support has been restored, may decide to change the information about the group requiring Coordinated QoS support. In this embodiment, if QoS cannot be satisfied/guaranteed for the group to which UE-2 belong, the AF may determine to change to information indicating that UE-3 is a UE whose QoS flow should be maintained, instead of information indicating that UE-3 is a UE whose QoS can be lowered.

The AF may provide an AF request containing information related to the changed UE group settings for UE-2 as described above through NEF. The content of AF request may be replaced with [1] described above.

Steps 21-26) Same as steps 8 to 13 described above.

### 5. Embodiment 5 - Reflection of [1] and [3]

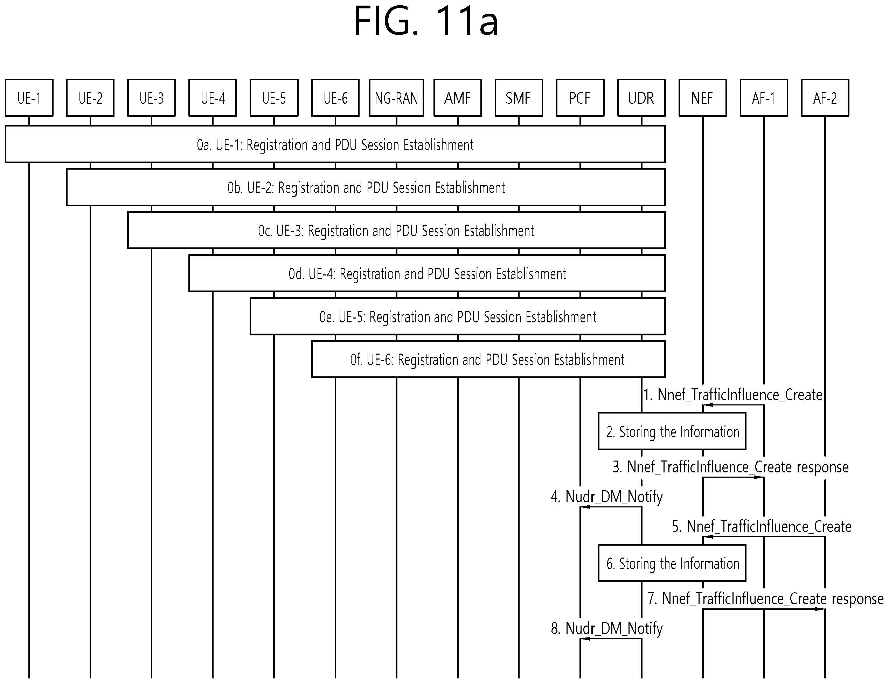

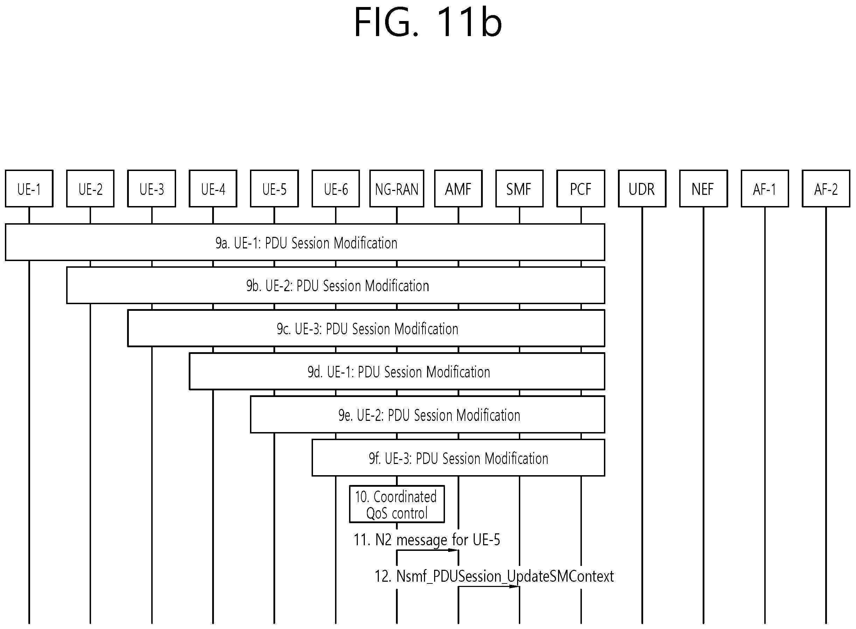

**FIGS. 11a** **and** **11b** **show the fifth embodiment of the present specification.**

In this embodiment, when providing information about a group requiring Coordinated QoS support to 5GC, AF may provide it including group-related service requirements (the K information in [1] described above).

It is assumed that UE-1, UE-2, and UE-3 are terminals belonging to the same terminal group with respect to an application that provides multi-modality service. Additionally, it is assumed that UE-4, UE-5, and UE-6 are terminals belonging to another terminal group with respect to an application that provides a multi-modality service. That is, it is assumed that UE-1, UE-2, and UE-3 belong to one group, and UE-4, UE-5, and UE-6 belong to another group.

Although the SMF and PCF serving UE-1, UE-2, and UE-3 are all shown as the same, they may be different.

Step 0a) Same as step 0a of embodiment 1 described above.

Step 0b) It is the same as step 0b of embodiment 1 described above.

Step 0c) It is the same as step 0c of embodiment 1 described above.

Step 0d) Same as step 0a of embodiment 1 described above. Instead, it can be interpreted as referring to UE-4 rather than to UE-1.

Step 0e) Same as step 0b of embodiment 1 described above. Instead, it can be interpreted as referring to UE-5 rather than to UE-2.

Step 0f) Same as step 0c of embodiment 1 described above. Instead, it can be interpreted as referring to UE-6 rather than to UE-3.

Steps 1-4. It is the same as steps 1 to 4 of the embodiment 1 described above. Compared to step 1 of the above-described embodiment 1, in step 1 of this embodiment, the AF request may additionally include group-related service requirements (the K information in [1] above). In this embodiment, in terms of QoS guarantee/satisfaction, the priority/importance of this group may be included by setting the index value to 5. For reference, the lower the index value, the higher the priority/importance.

Steps 5-8) It is the same as steps 1 to 4 of the embodiment 1 described above. Instead, it may be interpreted that the AF provides 5GC information about UE-4, UE-5, UE-6 and the groups they belong to, rather than information about UE-1, UE-2, UE-3 and the groups they belong to. Accordingly, it is assumed that the list of UE(s) for which QoS must be guaranteed includes UE-4 and UE-6, and the list of UE(s) for which QoS can be lowered includes UE-5. For UE-5, information on alternative service/QoS requirements (e.g., Alternative Service Requirements) may be provided.

Compared to step 1 of the above-described embodiment 1, in step 5 of this embodiment, the AF request may additionally include group-related service requirements (the K information in [1] above). In this embodiment, the priority/importance of this group in terms of QoS guarantee/satisfaction may be set to an index value of 8 and included.

Step 9a) Same as step 5a of the embodiment 1 described above. The difference is that the PCF may create a PCC rule including the group-related service requirements (priority/importance of the group to which UE-1 belongs) provided in step 4 above, and the SMF may include this information in the QoS profile and provide to the NG-RAN.

Step 9b) Same as step 5b of embodiment 1 described above. The difference is that the PCF may create a PCC rule including the group-related service requirements (priority/importance of the group to which UE-2 belongs) provided in step 4 above, and the SMF may include this information in the QoS profile and provide to the NG-RAN.

Step 9c) Same as step 5c of embodiment 1 described above. The difference is that the PCF may create a PCC rule including the group-related service requirements (priority/importance of the group to which UE-3 belongs) provided in step 4 above, and the SMF may include this information in the QoS profile and provide to the NG-RAN.

Step 9d) Same as step 5a of embodiment 1 described above. Instead, it can be interpreted as referring to UE-4 rather than to UE-1. The difference is that the PCF may create a PCC rule including the group-related service requirements (priority/importance of the group to which UE-3 belongs) provided in step 8 above, and the SMF may include this information in the QoS profile and provide to the NG-RAN.

Step 9e) Same as step 5b of embodiment 1 described above. Instead, it can be interpreted as referring to UE-5 rather than to UE-2. The difference is that the PCF may create a PCC rule including the group-related service requirements (priority/importance of the group to which UE-5 belongs) provided in step 8 above, and the SMF may include this information in the QoS profile and provide to the NG-RAN.

Step 9f) Same as step 5c of embodiment 1 described above. Instead, it can be interpreted as referring to UE-6 rather than to UE-3. The difference is that the PCF may create a PCC rule including the group-related service requirements (priority/importance of the group to which UE-6 belongs) provided in step 8 above, and the SMF may include this information in the QoS profile and provide to the NG-RAN.

Step 10) As NG-RAN resources become insufficient (e.g., as a result of measuring queuing delay, system load, congestion load/level/status, etc.), NG-RAN may determine to need to perform QoS control. Based on the information provided from the SMF in steps 9a to 9c, NG-RAN may determine UE-1, UE-2, and UE-3 as a group requiring Coordinated QoS control. Additionally, based on the information provided from SMF in steps 9d to 9f, NG-RAN may determine UE-4, UE-5, and UE-6 as another group requiring Coordinated QoS control.

The NG-RAN is provided with the priority/importance information of the groups themselves for the above two groups and may evaluate this. The NG-RAN determines that the group to which UE-1, UE-2, and UE-3 belong has higher priority/importance in terms of QoS guarantee/satisfaction compared to the group to which UE-4, UE-5, and UE-6 belong. Therefore, the NG-RAN may decide to lower the QoS first or release/remove the QoS Flow for the group to which UE-4, UE-5, and UE-6 belong. This may mean that QoS control/adjustment due to lack of QoS resources is performed first on the group including UE-4, UE-5, and UE-6 compared to the group including UE-1, UE-2, and UE-3.

The NG-RAN may determine that QoS should be maintained for UE-4 and UE-6 based on the Coordinated QoS support information of the group to which UE-4, UE-5, and UE-6 belong. Additionally, NG-RAN may select/determine UEs that can lower QoS or release QoS Flow in order to maintain QoS of UE-4 and UE-6. NG-RAN may decide to lower QoS for UE-5 and to what level to lower QoS based on Alternative QoS profiles.

Ultimately, when NG-RAN must perform QoS control due to lack of resources, and when priority/importance information of the group itself is provided with respect to a group requiring Coordinated QoS support, it may be interpreted that QoS control is performed on a group basis by taking this information into consideration as well. This first considers the priority/importance information of the group itself to determine whether QoS control/adjustment is necessary for this group, and then, , it may be interpreted that performs QoS control/adjustment based on differentiated QoS control information/policy among UEs in the group if necessary.

Steps 11-12) The NG-RAN that lowered the QoS for UE-5 may inform the SMF of this, including information on the level to which the QoS was lowered.

Although not shown, information received by the SMF from the NG-RAN may be notified to the AF through the PCF.

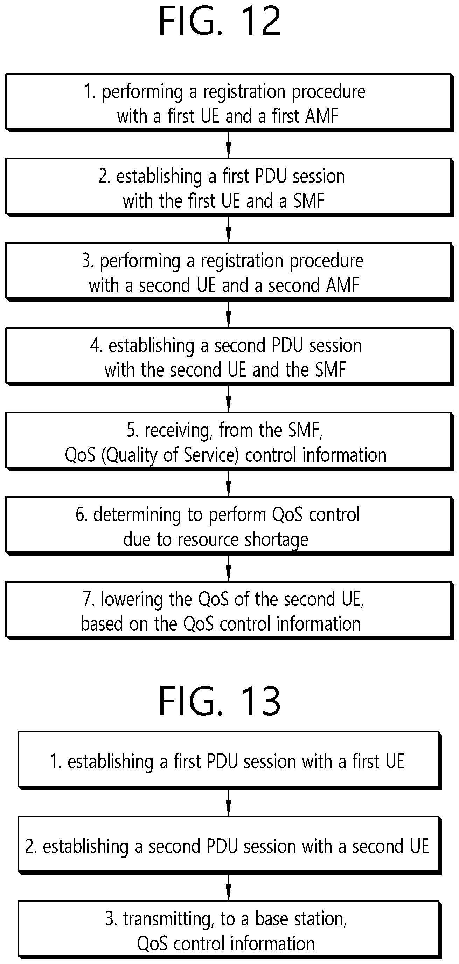

**FIG. 12** **shows the procedure of the base station according to the disclosure of this specification.**
1. The base station may perform a registration procedure with a first UE (User Equipment) and a first AMF (Access and Mobility Management Function).
2. The base station may establish a first PDU (Protocol Data Unit) session with the first UE and a SMF (Session Management Function).
3. The base station may perform a registration procedure with a second UE and a second AMF.
4. The base station may establish a second PDU session with the second UE and the SMF.
5. The base station may receive, from the SMF, QoS (Quality of Service) control information.

The QoS control information may include information on priority of QoS of the first UE and information on priority of QoS of the second UE.

The priority of the QoS of the first UE may be higher than the priority of the QoS of the second UE.

6. The base station may determine to perform QoS control due to resource shortage.

7. The base station may lower the QoS of the second UE, based on the QoS control information.

The QoS of the first UE may be maintained based on lowering the QoS of the second UE.

The step of receiving the QoS control information comprises receiving a first QoS control information including information on priority of QoS of the first UE; and receiving a second QoS control information including information on priority of QoS of the second UE.

The base station may notify the SMF that the QoS of the second UE has been lowered.

The base station may restoring the QoS of the second UE, based on the resource shortage being resolved.

The QoS control information may include identification information for a first group.

The first group may include the first UE and the second UE.

The QoS control information may include information indicating that Coordinated QoS support for the first group is necessary.

The base station may perform a registration procedure with a third UE and a third AMF.

The base station may establish a third PDU session with the third UE and the SMF.

The base station may receive the QoS control information.

The QoS control information may include identification information for a second group.

The second group may include the third UE.

Priority of QoS of the first group may be lower than priority of QoS of the second group.

The QoS control information may include information on to what level the QoS of the second UE can be lowered.

The QoS control information may include a high priority group list and a low priority group list.

The high priority group list may include the first UE.

The low priority group list may include the second UE.

Based on the base station lowering QoS of a specific UE, the QoS control information may include information requesting the base station to report the fact that the QoS of the specific UE has been lowered to the SMF.

Based on the base station releasing QoS of a specific UE, the QoS control information may include information requesting the base station to report the fact that the QoS flow of the specific UE has been released to the SMF.

**FIG. 13** **shows the procedure of the SMF according to the disclosure of this specification.**
1. The SMF may establish a first PDU (Protocol Data Unit) session with a first UE (User Equipment).
2. The SMF may establish a second PDU session with a second UE.
3. The SMF may transmit, to a base station, QoS (Quality of Service) control information.

The QoS control information may include information on priority of QoS of the first UE and information on priority of QoS of the second UE.

The priority of the QoS of the first UE may be higher than the priority of the QoS of the second UE.

Hereinafter, an apparatus for performing communication according to some embodiments of the present specification will be described.

For example, a base station may include a processor, a transceiver, and a memory.

For example, a processor may be configured to be operably coupled with a memory and a processor.

The processor may perform: performing a registration procedure with a first UE (User Equipment) and a first AMF (Access and Mobility Management Function); establishing a first PDU (Protocol Data Unit) session with the first UE and a SMF (Session Management Function); performing a registration procedure with a second UE and a second AMF; establishing a second PDU session with the second UE and the SMF; receiving, from the SMF, QoS (Quality of Service) control information; wherein the QoS control information includes information on priority of QoS of the first UE and information on priority of QoS of the second UE, wherein the priority of the QoS of the first UE is higher than the priority of the QoS of the second UE, determining to perform QoS control due to resource shortage; and lowering the QoS of the second UE, based on the QoS control information, wherein the QoS of the first UE is maintained based on lowering the QoS of the second UE.

Hereinafter, a processor for providing multi-modality service according to some embodiments of the present specification will be described.

The processor is configured to: performing a registration procedure with a first UE (User Equipment) and a first AMF (Access and Mobility Management Function); establishing a first PDU (Protocol Data Unit) session with the first UE and a SMF (Session Management Function); performing a registration procedure with a second UE and a second AMF; establishing a second PDU session with the second UE and the SMF; receiving, from the SMF, QoS (Quality of Service) control information; wherein the QoS control information includes information on priority of QoS of the first UE and information on priority of QoS of the second UE, wherein the priority of the QoS of the first UE is higher than the priority of the QoS of the second UE, determining to perform QoS control due to resource shortage; and lowering the QoS of the second UE, based on the QoS control information, wherein the QoS of the first UE is maintained based on lowering the QoS of the second UE..

Hereinafter, a non-volatile computer readable medium storing one or more instructions for providing multicast service in wireless communication according to some embodiments of the present specification will be described.

According to some embodiments of the present disclosure, the technical features of the present disclosure may be directly implemented as hardware, software executed by a processor, or a combination of the two. For example, in wireless communication, a method performed by a wireless device may be implemented in hardware, software, firmware, or any combination thereof. For example, the software may reside in RAM memory, flash memory, ROM memory, EPROM memory, EEPROM memory, registers, hard disk, removable disk, CD-ROM, or other storage medium.

Some examples of a storage medium are coupled to the processor such that the processor can read information from the storage medium. Alternatively, the storage medium may be integrated into the processor. The processor and storage medium may reside in the ASIC. For another example, a processor and a storage medium may reside as separate components.

Computer-readable media can include tangible and non-volatile computer-readable storage media.

For example, non-volatile computer-readable media may include random access memory (RAM), such as synchronization dynamic random access memory (SDRAM), read-only memory (ROM), or non-volatile random access memory (NVRAM). Read-only memory (EEPROM), flash memory, magnetic or optical data storage media, or other media that can be used to store instructions or data structures or Non-volatile computer readable media may also include combinations of the above.

Further, the methods described herein may be realized at least in part by computer-readable communication media that carry or carry code in the form of instructions or data structures and that can be accessed, read, and/or executed by a computer.

According to some embodiments of the present disclosure, a non-transitory computer-readable medium has one or more instructions stored thereon. The stored one or more instructions may be executed by a processor of the base station.

The stored one or more instructions cause the processors to: performing a registration procedure with a first UE (User Equipment) and a first AMF (Access and Mobility Management Function); establishing a first PDU (Protocol Data Unit) session with the first UE and a SMF (Session Management Function); performing a registration procedure with a second UE and a second AMF; establishing a second PDU session with the second UE and the SMF; receiving, from the SMF, QoS (Quality of Service) control information; wherein the QoS control information includes information on priority of QoS of the first UE and information on priority of QoS of the second UE, wherein the priority of the QoS of the first UE is higher than the priority of the QoS of the second UE, determining to perform QoS control due to resource shortage; and lowering the QoS of the second UE, based on the QoS control information, wherein the QoS of the first UE is maintained based on lowering the QoS of the second UE..

The present specification may have various effects.

For example, through the procedures disclosed herein, coordinated QoS can be efficiently provided to multiple UEs associated with one/same application.

Effects that can be obtained through specific examples of the present specification are not limited to the effects listed above. For example, various technical effects that a person having ordinary skill in the related art can understand or derive from this specification may exist. Accordingly, the specific effects of the present specification are not limited to those explicitly described herein, and may include various effects that can be understood or derived from the technical characteristics of the present specification.

The claims described herein may be combined in various ways. For example, the technical features of the method claims of the present specification may be combined and implemented as an apparatus, and the technical features of the apparatus claims of the present specification may be combined and implemented as a method. In addition, the technical features of the method claim of the present specification and the technical features of the apparatus claim may be combined to be implemented as an apparatus, and the technical features of the method claim of the present specification and the technical features of the apparatus claim may be combined and implemented as a method. Other implementations are within the scope of the following claims.

## Claims

1. A method for providing multi-modality service, performed by a base station, comprising:
performing a registration procedure with a first UE (User Equipment) and a first AMF (Access and Mobility Management Function);
establishing a first PDU (Protocol Data Unit) session with the first UE and a SMF (Session Management Function);
performing a registration procedure with a second UE and a second AMF;
establishing a second PDU session with the second UE and the SMF;
receiving, from the SMF, QoS (Quality of Service) control information;
wherein the QoS control information includes information on priority of QoS of the first UE and information on priority of QoS of the second UE,
wherein the priority of the QoS of the first UE is higher than the priority of the QoS of the second UE,
determining to perform QoS control due to resource shortage; and
lowering the QoS of the second UE, based on the QoS control information,
wherein the QoS of the first UE is maintained based on lowering the QoS of the second UE.

2. The method of claim 1, wherein the step of receiving the QoS control information comprises:
receiving a first QoS control information including information on priority of QoS of the first UE; and
receiving a second QoS control information including information on priority of QoS of the second UE.

3. The method of claim 1, further comprising:
notifying the SMF that the QoS of the second UE has been lowered.

4. The method of claim 1, further comprising:
restoring the QoS of the second UE, based on the resource shortage being resolved.

5. The method of claim 1,
wherein the QoS control information includes identification information for a first group,
wherein the first group includes the first UE and the second UE,
wherein the QoS control information includes information indicating that Coordinated QoS support for the first group is necessary.

6. The method of claim 5, further comprising:
performing a registration procedure with a third UE and a third AMF; and
establishing a third PDU session with the third UE and the SMF,
wherein the QoS control information includes identification information for a second group,
wherein the second group includes the third UE,
wherein priority of QoS of the first group is lower than priority of QoS of the second group.

7. The method of claim 1,
wherein the QoS control information includes information on to what level the QoS of the second UE can be lowered.

8. The method of claim 1,
wherein the QoS control information includes a high priority group list and a low priority group list,
wherein the high priority group list includes the first UE,
wherein the low priority group list includes the second UE.

9. The method of claim 1,
wherein, based on the base station lowering QoS of a specific UE, the QoS control information includes information requesting the base station to report the fact that the QoS of the specific UE has been lowered to the SMF,
wherein, based on the base station releasing QoS of a specific UE, the QoS control information includes information requesting the base station to report the fact that the QoS flow of the specific UE has been released to the SMF.

10. A base station, to provide multi-modality service, comprising:
a transceiver; and
a processor,
wherein the processor performs operation comprising:
performing a registration procedure with a first UE (User Equipment) and a first AMF (Access and Mobility Management Function);
establishing a first PDU (Protocol Data Unit) session with the first UE and a SMF (Session Management Function);
performing a registration procedure with a second UE and a second AMF;
establishing a second PDU session with the second UE and the SMF;
receiving, from the SMF, QoS (Quality of Service) control information;
wherein the QoS control information includes information on priority of QoS of the first UE and information on priority of QoS of the second UE,
wherein the priority of the QoS of the first UE is higher than the priority of the QoS of the second UE,
determining to perform QoS control due to resource shortage; and
lowering the QoS of the second UE, based on the QoS control information,
wherein the QoS of the first UE is maintained based on lowering the QoS of the second UE.

11. The base station of claim 10, wherin the operation further comprises:
notifying the SMF that the QoS of the second UE has been lowered.

12. The base station of claim 10, wherin the operation further comprises:
restoring the QoS of the second UE, based on the resource shortage being resolved.

13. The base station of claim 10,
wherein the QoS control information includes identification information for a first group,
wherein the first group includes the first UE and the second UE,
wherein the QoS control information includes information indicating that Coordinated QoS support for the first group is necessary.

14. The base station of claim 13, wherin the operation further comprises:
performing a registration procedure with a third UE and a third AMF; and
establishing a third PDU session with the third UE and the SMF,
wherein the QoS control information includes identification information for a second group,
wherein the second group includes the third UE,
wherein priority of QoS of the first group is lower than priority of QoS of the second group.

15. The base station of claim 10,
wherein the QoS control information includes information on to what level the QoS of the second UE can be lowered.

16. The base station of claim 10,
wherein the QoS control information includes a high priority group list and a low priority group list,
wherein the high priority group list includes the first UE,
wherein the low priority group list includes the second UE.

17. The base station of claim 10,
wherein, based on the base station lowering QoS of a specific UE, the QoS control information includes information requesting the base station to report the fact that the QoS of the specific UE has been lowered to the SMF,
wherein, based on the base station releasing QoS of a specific UE, the QoS control information includes information requesting the base station to report the fact that the QoS flow of the specific UE has been released to the SMF.

18. A method for providing multi-modality service, performed by a SMF (Session Management Function), comprising:
establishing a first PDU (Protocol Data Unit) session with a first UE (User Equipment);
establishing a second PDU session with a second UE;
transmitting, to a base station, QoS (Quality of Service) control information;
wherein the QoS control information includes information on priority of QoS of the first UE and information on priority of QoS of the second UE,
wherein the priority of the QoS of the first UE is higher than the priority of the QoS of the second UE.

19. An apparatus in mobile communication, comprising:
at least one processor; and
at least one memory storing instructions and operably electrically connectable with the at least one processor, based on the instructions being operated by the at least one processor, performed operation comprising:
performing a registration procedure with a first UE (User Equipment) and a first AMF (Access and Mobility Management Function);
establishing a first PDU (Protocol Data Unit) session with the first UE and a SMF (Session Management Function);
performing a registration procedure with a second UE and a second AMF;
establishing a second PDU session with the second UE and the SMF;
receiving, from the SMF, QoS (Quality of Service) control information;
wherein the QoS control information includes information on priority of QoS of the first UE and information on priority of QoS of the second UE,
wherein the priority of the QoS of the first UE is higher than the priority of the QoS of the second UE,
determining to perform QoS control due to resource shortage; and
lowering the QoS of the second UE, based on the QoS control information,
wherein the QoS of the first UE is maintained based on lowering the QoS of the second UE.

20. A non-volatile computer readable storage medium having recorded instructions,
wherein the instructions, based on being executed by one or more processors, cause the one or more processors to:
performing a registration procedure with a first UE (User Equipment) and a first AMF (Access and Mobility Management Function);
establishing a first PDU (Protocol Data Unit) session with the first UE and a SMF (Session Management Function);
performing a registration procedure with a second UE and a second AMF;
establishing a second PDU session with the second UE and the SMF;
receiving, from the SMF, QoS (Quality of Service) control information;
wherein the QoS control information includes information on priority of QoS of the first UE and information on priority of QoS of the second UE,
wherein the priority of the QoS of the first UE is higher than the priority of the QoS of the second UE,
determining to perform QoS control due to resource shortage; and
lowering the QoS of the second UE, based on the QoS control information,
wherein the QoS of the first UE is maintained based on lowering the QoS of the second UE.
